# EUROPEAN PATENT SPECIFICATION

(11) **EP 4 578 246 B1**
(45) Date of publication and mention of the grant of the patent: **01.07.2026**
(21) Application number: 23758090.7
(22) Date of filing: 27.07.2023
(51) Int. Cl.: H04W 76/28, H04W 76/14, H04W 64/00

(54) **INDEPENDENT SL-DRX INACTIVITY TIMER FOR THE POSITIONING USE CASES IN SL POSITIONING**
UNABHÄNGIGER SL-DRX-INAKTIVITÄTSTIMER ZUR POSITIONIERUNG VON VERWENDUNGSFÄLLEN IN DER SL-POSITIONIERUNG
TEMPORISATEUR D'INACTIVITÉ DE RÉCEPTION SL-DRX INDÉPENDANT POUR LES CAS D'UTILISATION DE POSITIONNEMENT DANS UN POSITIONNEMENT DE LIAISON SL

(30) Priority: 24.08.2022 GR 20220100704
(43) Date of publication of application: 02.07.2025
(73) Proprietor: QUALCOMM Incorporated, San Diego, California 92121-1714 (US)
(72) Inventor: MANOLAKOS, Alexandros, San Diego, California 92121 (US); KUMAR, Mukesh, San Diego, California 92121 (US); SARKIS, Gabi, San Diego, California 92121 (US); YERRAMALLI, Srinivas, San Diego, California 92121 (US)
(74) Representative: Reddie & Grose LLP
(86) International application number: PCT/US2023/028894
(87) International publication number: WO 2024/044017

(56) References cited:
- QUALCOMM INCORPORATED: "Potential Enhancements for NR Rel-17 Positioning", vol. RAN WG1, no. e-Meeting; 20200817 - 20200828, 8 August 2020 (2020-08-08), XP052348182, Retrieved from the Internet <URL:https://ftp.3gpp.org/tsg_ran/WG1_RL1/TSGR1_102-e/Docs/R1-2006810.zip> [retrieved on 20200808]
- ROBERT BOSCH GMBH: "Views on potential solutions for SL positioning", vol. RAN WG1, no. E-Meeting; 20220509 - 20220520, 29 April 2022 (2022-04-29), XP052203871, Retrieved from the Internet <URL:https://ftp.3gpp.org/tsg_ran/WG1_RL1/TSGR1_109-e/Docs/R1-2204869.zip> [retrieved on 20220429]

## Description

### TECHNICAL FIELD

The present disclosure relates generally to communication systems, and more particularly, to wireless communication systems with sidelink (SL) communications and positioning.

### INTRODUCTION

Wireless communication systems are widely deployed to provide various telecommunication services such as telephony, video, data, messaging, and broadcasts. Typical wireless communication systems may employ multiple-access technologies capable of supporting communication with multiple users by sharing available system resources. Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems.

These multiple access technologies have been adopted in various telecommunication standards to provide a common protocol that enables different wireless devices to communicate on a municipal, national, regional, and even global level. An example telecommunication standard is 5G New Radio (NR). 5G NR is part of a continuous mobile broadband evolution promulgated by Third Generation Partnership Project (3GPP) to meet new requirements associated with latency, reliability, security, scalability (e.g., with Internet of Things (IoT)), and other requirements. 5G NR includes services associated with enhanced mobile broadband (eMBB), massive machine type communications (mMTC), and ultra-reliable low latency communications (URLLC). Some aspects of 5G NR may be based on the 4G Long Term Evolution (LTE) standard. There exists a need for further improvements in 5G NR technology. These improvements may also be applicable to other multi-access technologies and the telecommunication standards that employ these technologies.

QUALCOMM INCORPORATED: "Potential Enhancements for NR Rel-17 Positioning", 3GPP DRAFT; R1-2006810, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20200817 - 20200828 8 August 2020 (2020-08-08), XP052348182, Retrieved from the Internet: URL: https://ftp.3gpp.org/tsg_ran/WG1_RL1/TSGR1_102-e/Docs/R1-2006810.zip R1-2006810.docx [retrieved on 2020-08-08] describes potential enhancements for NR Rel-17 SI on positioning.

ROBERT BOSCH GMBH: "Views on potential solutions for SL positioning", 3GPP DRAFT; R1-2204869, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. E-Meeting; 20220509 - 20220520 29 April 2022 (2022-04-29), XP052203871, Retrieved from the Internet: URL: https://ftp.3gpp.org/tsg_ran/WG1_RL1/TSGR1_109-e/Docs/R1-2204869.zip R1-2204869 Views on potential solutions for SLpositioning_vF.docx [retrieved on 2022-04-29] describes potential solutions for NR sidelink positioning.

### BRIEF SUMMARY

The invention is defined in the independent claims. Embodiments of the invention are set out in the dependent claims. The following presents a simplified summary of one or more aspects in order to provide a basic understanding of such aspects. This summary is not an extensive overview of all contemplated aspects. This summary neither identifies key or critical elements of all aspects nor delineates the scope of any or all aspects. Its sole purpose is to present some concepts of one or more aspects in a simplified form as a prelude to the more detailed description that is presented later.

In an aspect of the disclosure, a method, a computer-readable medium, and an apparatus at a user equipment (UE) are provided. The apparatus may include a memory and at least one processor coupled to the memory. The memory and the at least one processor coupled to the memory may be configured to receive an SL DRX configuration including a first inactivity timer associated with a non-positioning communication and a second inactivity timer associated with a positioning communication, where the first inactivity timer corresponds to a first duration and the second inactivity timer corresponds to a second duration. The memory and the at least one processor coupled to the memory may be further configured to enter a sleep state based on the SL DRX configuration. The memory and the at least one processor coupled to the memory may be further configured to initiate a wake-up state from the sleep state to receive a message associated with scheduling a SL PRS. The memory and the at least one processor coupled to the memory may be further configured to trigger a continuation of the wake-up state upon receiving the message to receive at least one subsequent transmission including the SL PRS, where a duration of the continuation of the wake-up state is based on the first duration or the second duration.

In another aspect of the disclosure, a method, a computer-readable medium, and an apparatus at a UE are provided. The apparatus may include a memory and at least one processor coupled to the memory. The memory and the at least one processor coupled to the memory may be configured to establish a positioning session with a second UE. The memory and the at least one processor coupled to the memory may be further configured to transmit an SL DRX configuration including a first inactivity timer associated with a non-positioning communication and a second inactivity timer associated with a positioning communication, where the first inactivity timer corresponds to a first duration and the second inactivity timer corresponds to a second duration. The memory and the at least one processor coupled to the memory may be further configured to transmit a message associated with scheduling a SL PRS, where at least one subsequent transmission to the UE includes the SL PRS.

To the accomplishment of the foregoing and related ends, the one or more aspects comprise the features hereinafter fully described and particularly pointed out in the claims. The following description and the drawings set forth in detail certain illustrative features of the one or more aspects. These features are indicative, however, of but a few of the various ways in which the principles of various aspects may be employed.

### BRIEF DESCRIPTION OF THE DRAWINGS

FIG. 1 is a diagram illustrating an example of a wireless communications system and an access network.
FIG. 2 illustrates example aspects of a sidelink (SL) slot structure.
FIG. 3 is a diagram illustrating an example of a first device and a second device involved in wireless communication based, e.g., on sidelink.
FIG. 4 is a diagram illustrating an example of a UE positioning based on reference signal measurements.
FIG. 5 illustrates example aspects of sidelink communication between devices.
FIG. 6 is a diagram illustrating the discontinuous reception (DRX) process.
FIG. 7A is a diagram illustrating an example of positioning.
FIG. 7B is a diagram illustrating an example of positioning.
FIG. 7C is a diagram illustrating an example of positioning.
FIG. 8 is a diagram illustrating example procedures for sidelink based positioning.
FIG. 9A is a diagram illustrating an example of positioning peer (pos-peer) selection procedures of SL cooperative positioning.
FIG. 9B is a diagram illustrating an example of pos-peer selection procedures of SL cooperative positioning.
FIG. 10A is a diagram illustrating an example of SL DRX.
FIG. 10B is a diagram illustrating an example of SL DRX.
FIG. 11 is a diagram illustrating an example of SL DRX configuration.
FIG. 12 is a diagram illustrating an example of DRX configuration.
FIG. 13 is a diagram illustrating example communications between a UE, a network entity (such as a base station or a UE), and one or more other UEs.
FIG. 14 is a diagram illustrating an example of SL DRX configuration.
FIG. 15 is a diagram illustrating an example of SL DRX configuration.
FIG. 16 is a flowchart of a method of wireless communication.
FIG. 17 is a flowchart of a method of wireless communication.
FIG. 18 is a diagram illustrating an example of a hardware implementation for an example apparatus and/or network entity.

### DETAILED DESCRIPTION

The detailed description set forth below in connection with the drawings describes various configurations and does not represent the only configurations in which the concepts described herein may be practiced. The detailed description includes specific details for the purpose of providing a thorough understanding of various concepts. However, these concepts may be practiced without these specific details. In some instances, well known structures and components are shown in block diagram form in order to avoid obscuring such concepts.

Several aspects of telecommunication systems are presented with reference to various apparatus and methods. These apparatus and methods are described in the following detailed description and illustrated in the accompanying drawings by various blocks, components, circuits, processes, algorithms, etc. (collectively referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented as a "processing system" that includes one or more processors. Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software, whether referred to as software, firmware, middleware, microcode, hardware description language, or otherwise, shall be construed broadly to mean instructions, instruction sets, code, code segments, program code, programs, subprograms, software components, applications, software applications, software packages, routines, subroutines, objects, executables, threads of execution, procedures, functions, or any combination thereof.

Accordingly, in one or more example aspects, implementations, and/or use cases, the functions described may be implemented in hardware, software, or any combination thereof. If implemented in software, the functions may be stored on or encoded as one or more instructions or code on a computer-readable medium. Computer-readable media includes computer storage media. Storage media may be any available media that can be accessed by a computer. By way of example, such computer-readable media can include a random-access memory (RAM), a read-only memory (ROM), an electrically erasable programmable ROM (EEPROM), optical disk storage, magnetic disk storage, other magnetic storage devices, combinations of the types of computer-readable media, or any other medium that can be used to store computer executable code in the form of instructions or data structures that can be accessed by a computer.

While aspects, implementations, and/or use cases are described in this application by illustration to some examples, additional or different aspects, implementations and/or use cases may come about in many different arrangements and scenarios. Aspects, implementations, and/or use cases described herein may be implemented across many differing platform types, devices, systems, shapes, sizes, and packaging arrangements. For example, aspects, implementations, and/or use cases may come about via integrated chip implementations and other non-module-component based devices (e.g., end-user devices, vehicles, communication devices, computing devices, industrial equipment, retail/purchasing devices, medical devices, artificial intelligence (AI)-enabled devices, etc.). While some examples may or may not be specifically directed to use cases or applications, a wide assortment of applicability of described examples may occur. Aspects, implementations, and/or use cases may range a spectrum from chip-level or modular components to non-modular, non-chip-level implementations and further to aggregate, distributed, or original equipment manufacturer (OEM) devices or systems incorporating one or more techniques herein. In some practical settings, devices incorporating described aspects and features may also include additional components and features for implementation and practice of claimed and described aspect. For example, transmission and reception of wireless signals necessarily includes a number of components for analog and digital purposes (e.g., hardware components including antenna, RF-chains, power amplifiers, modulators, buffer, processor(s), interleaver, adders/summers, etc.). Techniques described herein may be practiced in a wide variety of devices, chip-level components, systems, distributed arrangements, aggregated or disaggregated components, end-user devices, etc. of varying sizes, shapes, and constitution.

Deployment of communication systems, such as 5G NR systems, may be arranged in multiple manners with various components or constituent parts. In a 5G NR system, or network, a network node, a network entity, a mobility element of a network, a radio access network (RAN) node, a core network node, a network element, or a network equipment, such as a base station (BS), or one or more units (or one or more components) performing base station functionality, may be implemented in an aggregated or disaggregated architecture. For example, a BS (such as a Node B (NB), evolved NB (eNB), NR BS, 5GNB, access point (AP), a transmit receive point (TRP), or a cell, etc.) may be implemented as an aggregated base station (also known as a standalone BS or a monolithic BS) or a disaggregated base station.

An aggregated base station may be configured to utilize a radio protocol stack that is physically or logically integrated within a single RAN node. A disaggregated base station may be configured to utilize a protocol stack that is physically or logically distributed among two or more units (such as one or more central or centralized units (CUs), one or more distributed units (DUs), or one or more radio units (RUs)). In some aspects, a CU may be implemented within a RAN node, and one or more DUs may be co-located with the CU, or alternatively, may be geographically or virtually distributed throughout one or multiple other RAN nodes. The DUs may be implemented to communicate with one or more RUs. Each of the CU, DU and RU can be implemented as virtual units, i.e., a virtual central unit (VCU), a virtual distributed unit (VDU), or a virtual radio unit (VRU).

Base station operation or network design may consider aggregation characteristics of base station functionality. For example, disaggregated base stations may be utilized in an integrated access backhaul (IAB) network, an open radio access network (O-RAN (such as the network configuration sponsored by the O-RAN Alliance)), or a virtualized radio access network (vRAN, also known as a cloud radio access network (C-RAN)). Disaggregation may include distributing functionality across two or more units at various physical locations, as well as distributing functionality for at least one unit virtually, which can enable flexibility in network design. The various units of the disaggregated base station, or disaggregated RAN architecture, can be configured for wired or wireless communication with at least one other unit.

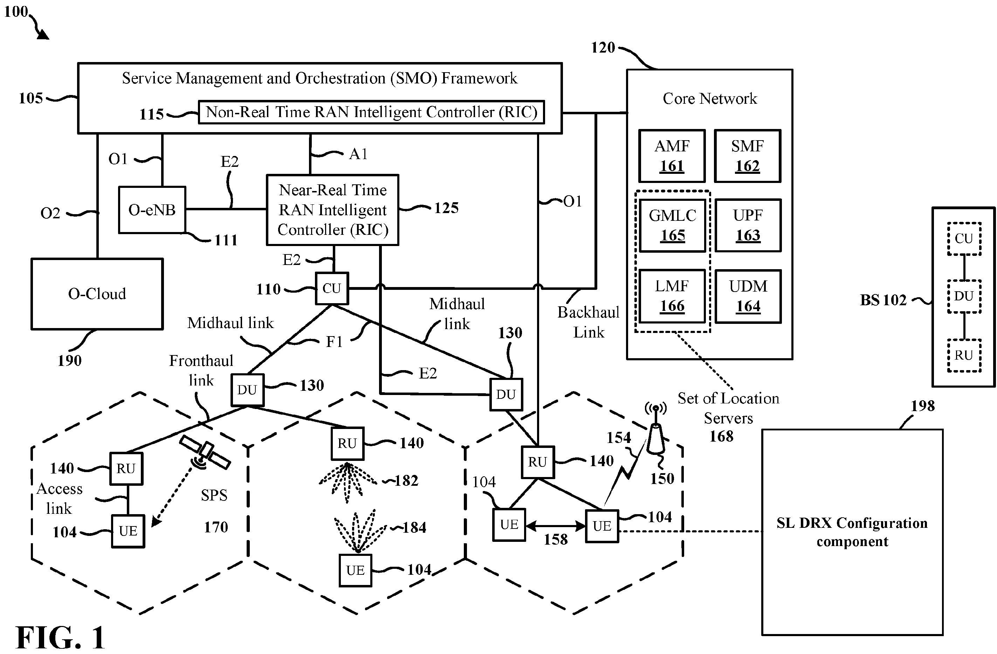

FIG. 1 is a diagram 100 illustrating an example of a wireless communications system and an access network. The illustrated wireless communications system includes a disaggregated base station architecture. The disaggregated base station architecture may include one or more CUs 110 that can communicate directly with a core network 120 via a backhaul link, or indirectly with the core network 120 through one or more disaggregated base station units (such as a Near-Real Time (Near-RT) RAN Intelligent Controller (RIC) 125 via an E2 link, or a Non-Real Time (Non-RT) RIC 115 associated with a Service Management and Orchestration (SMO) Framework 105, or both). A CU 110 may communicate with one or more DUs 130 via respective midhaul links, such as an F1 interface. The DUs 130 may communicate with one or more RUs 140 via respective fronthaul links. The RUs 140 may communicate with respective UEs 104 via one or more radio frequency (RF) access links. In some implementations, the UE 104 may be simultaneously served by multiple RUs 140.

Each of the units, i.e., the CUs 110, the DUs 130, the RUs 140, as well as the Near-RT RICs 125, the Non-RT RICs 115, and the SMO Framework 105, may include one or more interfaces or be coupled to one or more interfaces configured to receive or to transmit signals, data, or information (collectively, signals) via a wired or wireless transmission medium. Each of the units, or an associated processor or controller providing instructions to the communication interfaces of the units, can be configured to communicate with one or more of the other units via the transmission medium. For example, the units can include a wired interface configured to receive or to transmit signals over a wired transmission medium to one or more of the other units. Additionally, the units can include a wireless interface, which may include a receiver, a transmitter, or a transceiver (such as an RF transceiver), configured to receive or to transmit signals, or both, over a wireless transmission medium to one or more of the other units.

In some aspects, the CU 110 may host one or more higher layer control functions. Such control functions can include radio resource control (RRC), packet data convergence protocol (PDCP), service data adaptation protocol (SDAP), or the like. Each control function can be implemented with an interface configured to communicate signals with other control functions hosted by the CU 110. The CU 110 may be configured to handle user plane functionality (i.e., Central Unit - User Plane (CU-UP)), control plane functionality (i.e., Central Unit - Control Plane (CU-CP)), or a combination thereof. In some implementations, the CU 110 can be logically split into one or more CU-UP units and one or more CU-CP units. The CU-UP unit can communicate bidirectionally with the CU-CP unit via an interface, such as an E1 interface when implemented in an O-RAN configuration. The CU 110 can be implemented to communicate with the DU 130, as necessary, for network control and signaling.

The DU 130 may correspond to a logical unit that includes one or more base station functions to control the operation of one or more RUs 140. In some aspects, the DU 130 may host one or more of a radio link control (RLC) layer, a medium access control (MAC) layer, and one or more high physical (PHY) layers (such as modules for forward error correction (FEC) encoding and decoding, scrambling, modulation, demodulation, or the like) depending on a functional split, such as those defined by 3GPP. In some aspects, the DU 130 may further host one or more low PHY layers. Each layer (or module) can be implemented with an interface configured to communicate signals with other layers (and modules) hosted by the DU 130, or with the control functions hosted by the CU 110.

Lower-layer functionality can be implemented by one or more RUs 140. In some deployments, an RU 140, controlled by a DU 130, may correspond to a logical node that hosts RF processing functions, or low-PHY layer functions (such as performing fast Fourier transform (FFT), inverse FFT (iFFT), digital beamforming, physical random access channel (PRACH) extraction and filtering, or the like), or both, based on the functional split, such as a lower layer functional split. In such an architecture, the RU(s) 140 can be implemented to handle over the air (OTA) communication with one or more UEs 104. In some implementations, real-time and non-real-time aspects of control and user plane communication with the RU(s) 140 can be controlled by the corresponding DU 130. In some scenarios, this configuration can enable the DU(s) 130 and the CU 110 to be implemented in a cloud-based RAN architecture, such as a vRAN architecture.

The SMO Framework 105 may be configured to support RAN deployment and provisioning of non-virtualized and virtualized network elements. For non-virtualized network elements, the SMO Framework 105 may be configured to support the deployment of dedicated physical resources for RAN coverage requirements that may be managed via an operations and maintenance interface (such as an O1 interface). For virtualized network elements, the SMO Framework 105 may be configured to interact with a cloud computing platform (such as an open cloud (O-Cloud) 190) to perform network element life cycle management (such as to instantiate virtualized network elements) via a cloud computing platform interface (such as an O2 interface). Such virtualized network elements can include, but are not limited to, CUs 110, DUs 130, RUs 140 and Near-RT RICs 125. In some implementations, the SMO Framework 105 can communicate with a hardware aspect of a 4G RAN, such as an open eNB (O-eNB) 111, via an O1 interface. Additionally, in some implementations, the SMO Framework 105 can communicate directly with one or more RUs 140 via an O1 interface. The SMO Framework 105 also may include a Non-RT RIC 115 configured to support functionality of the SMO Framework 105.

The Non-RT RIC 115 may be configured to include a logical function that enables non-real-time control and optimization of RAN elements and resources, artificial intelligence (AI) / machine learning (ML) (AI/ML) workflows including model training and updates, or policy-based guidance of applications/features in the Near-RT RIC 125. The Non-RT RIC 115 may be coupled to or communicate with (such as via an A1 interface) the Near-RT RIC 125. The Near-RT RIC 125 may be configured to include a logical function that enables near-real-time control and optimization of RAN elements and resources via data collection and actions over an interface (such as via an E2 interface) connecting one or more CUs 110, one or more DUs 130, or both, as well as an O-eNB, with the Near-RT RIC 125.

In some implementations, to generate AI/ML models to be deployed in the Near-RT RIC 125, the Non-RT RIC 115 may receive parameters or external enrichment information from external servers. Such information may be utilized by the Near-RT RIC 125 and may be received at the SMO Framework 105 or the Non-RT RIC 115 from non-network data sources or from network functions. In some examples, the Non-RT RIC 115 or the Near-RT RIC 125 may be configured to tune RAN behavior or performance. For example, the Non-RT RIC 115 may monitor long-term trends and patterns for performance and employ AI/ML models to perform corrective actions through the SMO Framework 105 (such as reconfiguration via O1) or via creation of RAN management policies (such as A1 policies).

At least one of the CU 110, the DU 130, and the RU 140 may be referred to as a base station 102. Accordingly, a base station 102 may include one or more of the CU 110, the DU 130, and the RU 140 (each component indicated with dotted lines to signify that each component may or may not be included in the base station 102). The base station 102 provides an access point to the core network 120 for a UE 104. The base stations 102 may include macrocells (high power cellular base station) and/or small cells (low power cellular base station). The small cells include femtocells, picocells, and microcells. A network that includes both small cell and macrocells may be known as a heterogeneous network. A heterogeneous network may also include Home Evolved Node Bs (eNBs) (HeNBs), which may provide service to a restricted group known as a closed subscriber group (CSG). The communication links between the RUs 140 and the UEs 104 may include uplink (UL) (also referred to as reverse link) transmissions from a UE 104 to an RU 140 and/or downlink (DL) (also referred to as forward link) transmissions from an RU 140 to a UE 104. The communication links may use multiple-input and multiple-output (MIMO) antenna technology, including spatial multiplexing, beamforming, and/or transmit diversity. The communication links may be through one or more carriers. The base stations 102 / UEs 104 may use spectrum up to *Y* MHz (e.g., 5, 10, 15, 20, 100, 400, etc. MHz) bandwidth per carrier allocated in a carrier aggregation of up to a total of *Yx* MHz (x component carriers) used for transmission in each direction. The carriers may or may not be adjacent to each other. Allocation of carriers may be asymmetric with respect to DL and UL (e.g., more or fewer carriers may be allocated for DL than for UL). The component carriers may include a primary component carrier and one or more secondary component carriers. A primary component carrier may be referred to as a primary cell (PCell) and a secondary component carrier may be referred to as a secondary cell (SCell).

Certain UEs 104 may communicate with each other using device-to-device (D2D) communication link 158. The D2D communication link 158 may use the DL/UL wireless wide area network (WWAN) spectrum. The D2D communication link 158 may use one or more sidelink channels, such as a physical sidelink broadcast channel (PSBCH), a physical sidelink discovery channel (PSDCH), a physical sidelink shared channel (PSSCH), and a physical sidelink control channel (PSCCH). D2D communication may be through a variety of wireless D2D communications systems, such as for example, Bluetooth, Wi-Fi based on the Institute of Electrical and Electronics Engineers (IEEE) 802.11 standard, LTE, or NR.

The wireless communications system may further include a Wi-Fi AP 150 in communication with UEs 104 (also referred to as Wi-Fi stations (STAs)) via communication link 154, e.g., in a 5 GHz unlicensed frequency spectrum or the like. When communicating in an unlicensed frequency spectrum, the UEs 104 / AP 150 may perform a clear channel assessment (CCA) prior to communicating in order to determine whether the channel is available.

The electromagnetic spectrum is often subdivided, based on frequency/wavelength, into various classes, bands, channels, etc. In 5G NR, two initial operating bands have been identified as frequency range designations FR1 (410 MHz - 7.125 GHz) and FR2 (24.25 GHz - 52.6 GHz). Although a portion of FR1 is greater than 6 GHz, FR1 is often referred to (interchangeably) as a "sub-6 GHz" band in various documents and articles. A similar nomenclature issue sometimes occurs with regard to FR2, which is often referred to (interchangeably) as a "millimeter wave" band in documents and articles, despite being different from the extremely high frequency (EHF) band (30 GHz - 300 GHz) which is identified by the International Telecommunications Union (ITU) as a "millimeter wave" band.

The frequencies between FR1 and FR2 are often referred to as mid-band frequencies. Recent 5G NR studies have identified an operating band for these mid-band frequencies as frequency range designation FR3 (7.125 GHz - 24.25 GHz). Frequency bands falling within FR3 may inherit FR1 characteristics and/or FR2 characteristics, and thus may effectively extend features of FR1 and/or FR2 into mid-band frequencies. In addition, higher frequency bands are currently being explored to extend 5G NR operation beyond 52.6 GHz. For example, three higher operating bands have been identified as frequency range designations FR2-2 (52.6 GHz - 71 GHz), FR4 (71 GHz - 114.25 GHz), and FR5 (114.25 GHz - 300 GHz). Each of these higher frequency bands falls within the EHF band.

With the above aspects in mind, unless specifically stated otherwise, the term "sub-6 GHz" or the like if used herein may broadly represent frequencies that may be less than 6 GHz, may be within FR1, or may include mid-band frequencies. Further, unless specifically stated otherwise, the term "millimeter wave" or the like if used herein may broadly represent frequencies that may include mid-band frequencies, may be within FR2, FR4, FR2-2, and/or FR5, or may be within the EHF band.

The base station 102 and the UE 104 may each include a plurality of antennas, such as antenna elements, antenna panels, and/or antenna arrays to facilitate beamforming. The base station 102 may transmit a beamformed signal 182 to the UE 104 in one or more transmit directions. The UE 104 may receive the beamformed signal from the base station 102 in one or more receive directions. The UE 104 may also transmit a beamformed signal 184 to the base station 102 in one or more transmit directions. The base station 102 may receive the beamformed signal from the UE 104 in one or more receive directions. The base station 102 / UE 104 may perform beam training to determine the best receive and transmit directions for each of the base station 102 / UE 104. The transmit and receive directions for the base station 102 may or may not be the same. The transmit and receive directions for the UE 104 may or may not be the same.

The base station 102 may include and/or be referred to as a gNB, Node B, eNB, an access point, a base transceiver station, a radio base station, a radio transceiver, a transceiver function, a basic service set (BSS), an extended service set (ESS), a TRP, network node, network entity, network equipment, or some other suitable terminology. The base station 102 can be implemented as an integrated access and backhaul (IAB) node, a relay node, a sidelink node, an aggregated (monolithic) base station with a baseband unit (BBU) (including a CU and a DU) and an RU, or as a disaggregated base station including one or more of a CU, a DU, and/or an RU.

The core network 120 may include an Access and Mobility Management Function (AMF) 161, a Session Management Function (SMF) 162, a User Plane Function (UPF) 163, a Unified Data Management (UDM) 164, one or more location servers 168, and other functional entities. The AMF 161 is the control node that processes the signaling between the UEs 104 and the core network 120. The AMF 161 supports registration management, connection management, mobility management, and other functions. The SMF 162 supports session management and other functions. The UPF 163 supports packet routing, packet forwarding, and other functions. The UDM 164 supports the generation of authentication and key agreement (AKA) credentials, user identification handling, access authorization, and subscription management. The one or more location servers 168 are illustrated as including a Gateway Mobile Location Center (GMLC) 165 and a Location Management Function (LMF) 166. However, generally, the one or more location servers 168 may include one or more location/positioning servers, which may include one or more of the GMLC 165, the LMF 166, a position determination entity (PDE), a serving mobile location center (SMLC), a mobile positioning center (MPC), or the like. The GMLC 165 and the LMF 166 support UE location services. The GMLC 165 provides an interface for clients/applications (e.g., emergency services) for accessing UE positioning information. The LMF 166 receives measurements and assistance information from the NG-RAN and the UE 104 via the AMF 161 to compute the position of the UE 104. The NG-RAN may utilize one or more positioning methods in order to determine the position of the UE 104. Positioning the UE 104 may involve signal measurements, a position estimate, and an optional velocity computation based on the measurements. The signal measurements may be made by the UE 104 and/or the serving base station 102. The signals measured may be based on one or more of a satellite positioning system (SPS) 170 (e.g., one or more of a Global Navigation Satellite System (GNSS), global position system (GPS), non-terrestrial network (NTN), or other satellite position/location system), LTE signals, wireless local area network (WLAN) signals, Bluetooth signals, a terrestrial beacon system (TBS), sensor-based information (e.g., barometric pressure sensor, motion sensor), NR enhanced cell ID (NR E-CID) methods, NR signals (e.g., multi-round trip time (Multi-RTT), DL angle-of-departure (DL-AoD), DL time difference of arrival (DL-TDOA), UL time difference of arrival (UL-TDOA), and UL angle-of-arrival (UL-AoA) positioning), and/or other systems/signals/sensors.

Examples of UEs 104 include a cellular phone, a smart phone, a session initiation protocol (SIP) phone, a laptop, a personal digital assistant (PDA), a satellite radio, a global positioning system, a multimedia device, a video device, a digital audio player (e.g., MP3 player), a camera, a game console, a tablet, a smart device, a wearable device, a vehicle, an electric meter, a gas pump, a large or small kitchen appliance, a healthcare device, an implant, a sensor/actuator, a display, or any other similar functioning device. Some of the UEs 104 may be referred to as IoT devices (e.g., parking meter, gas pump, toaster, vehicles, heart monitor, etc.). The UE 104 may also be referred to as a station, a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology. In some scenarios, the term UE may also apply to one or more companion devices such as in a device constellation arrangement. One or more of these devices may collectively access the network and/or individually access the network.

Referring again to FIG. 1, in some aspects, the UE 104 may include a sidelink DRX configuration component 198. In some aspects, the sidelink DRX configuration component 198 may be configured to receive an SL DRX configuration including a first inactivity timer associated with a non-positioning communication and a second inactivity timer associated with a positioning communication, where the first inactivity timer corresponds to a first duration and the second inactivity timer corresponds to a second duration. In some aspects, the sidelink DRX configuration component 198 may be further configured to enter a sleep state based on the SL DRX configuration. In some aspects, the sidelink DRX configuration component 198 may be further configured to initiate a wake-up state from the sleep state to receive a message associated with scheduling a SL PRS. In some aspects, the sidelink DRX configuration component 198 may be further configured to trigger a continuation of the wake-up state upon receiving the message to receive at least one subsequent transmission including the SL PRS, where a duration of the continuation of the wake-up state is based on the first duration or the second duration.

In some aspects, the sidelink DRX configuration component 198 may be configured to establish a positioning session with a second UE. In some aspects, the sidelink DRX configuration component 198 may be further configured to transmit an SL DRX configuration including a first inactivity timer associated with a non-positioning communication and a second inactivity timer associated with a positioning communication, where the first inactivity timer corresponds to a first duration and the second inactivity timer corresponds to a second duration. In some aspects, the sidelink DRX configuration component 198 may be further configured to transmit a message associated with scheduling a SL PRS, where at least one subsequent transmission to the UE includes the SL PRS.

Although the following description may be focused on 5G NR, the concepts described herein may be applicable to other similar areas, such as LTE, LTE-A, CDMA, GSM, and other wireless technologies.

As described herein, a node (which may be referred to as a node, a network node, a network entity, or a wireless node) may include, be, or be included in (e.g., be a component of) a base station (e.g., any base station described herein), a UE (e.g., any UE described herein), a network controller, an apparatus, a device, a computing system, an integrated access and backhauling (IAB) node, a distributed unit (DU), a central unit (CU), a remote/radio unit (RU) (which may also be referred to as a remote radio unit (RRU)), and/or another processing entity configured to perform any of the techniques described herein. For example, a network node may be a UE. As another example, a network node may be a base station or network entity. As another example, a first network node may be configured to communicate with a second network node or a third network node. In one aspect of this example, the first network node may be a UE, the second network node may be a base station, and the third network node may be a UE. In another aspect of this example, the first network node may be a UE, the second network node may be a base station, and the third network node may be a base station. In yet other aspects of this example, the first, second, and third network nodes may be different relative to these examples. Similarly, reference to a UE, base station, apparatus, device, computing system, or the like may include disclosure of the UE, base station, apparatus, device, computing system, or the like being a network node. For example, disclosure that a UE is configured to receive information from a base station also discloses that a first network node is configured to receive information from a second network node. Consistent with this disclosure, once a specific example is broadened in accordance with this disclosure (e.g., a UE is configured to receive information from a base station also discloses that a first network node is configured to receive information from a second network node), the broader example of the narrower example may be interpreted in the reverse, but in a broad open-ended way. In the example above where a UE is configured to receive information from a base station also discloses that a first network node is configured to receive information from a second network node, the first network node may refer to a first UE, a first base station, a first apparatus, a first device, a first computing system, a first set of one or more one or more components, a first processing entity, or the like configured to receive the information; and the second network node may refer to a second UE, a second base station, a second apparatus, a second device, a second computing system, a second set of one or more components, a second processing entity, or the like.

As described herein, communication of information (e.g., any information, signal, or the like) may be described in various aspects using different terminology. Disclosure of one communication term includes disclosure of other communication terms. For example, a first network node may be described as being configured to transmit information to a second network node. In this example and consistent with this disclosure, disclosure that the first network node is configured to transmit information to the second network node includes disclosure that the first network node is configured to provide, send, output, communicate, or transmit information to the second network node. Similarly, in this example and consistent with this disclosure, disclosure that the first network node is configured to transmit information to the second network node includes disclosure that the second network node is configured to receive, obtain, or decode the information that is provided, sent, output, communicated, or transmitted by the first network node.

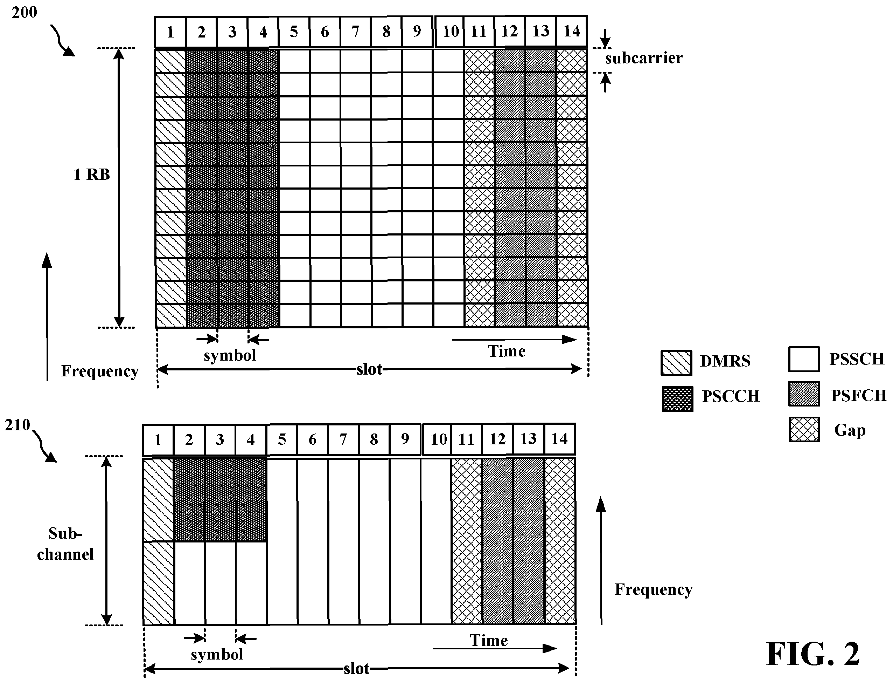

FIG. 2 includes diagrams 200 and 210 illustrating example aspects of slot structures that may be used for sidelink communication (e.g., between UEs 104, RSU 107, etc.). The slot structure may be within a 5G/NR frame structure in some examples. In other examples, the slot structure may be within an LTE frame structure. Although the following description may be focused on 5G NR, the concepts described herein may be applicable to other similar areas, such as LTE, LTE-A, CDMA, GSM, and other wireless technologies. The example slot structure in FIG. 2 is merely one example, and other sidelink communication may have a different frame structure and/or different channels for sidelink communication. A frame (10 ms) may be divided into 10 equally sized subframes (1 ms). Each subframe may include one or more time slots. Subframes may also include mini-slots, which may include 7, 4, or 2 symbols. Each slot may include 7 or 14 symbols, depending on the slot configuration. For slot configuration 0, each slot may include 14 symbols, and for slot configuration 1, each slot may include 7 symbols. Diagram 200 illustrates a single resource block of a single slot transmission, e.g., which may correspond to a 0.5 ms transmission time interval (TTI). A physical sidelink control channel may be configured to occupy multiple physical resource blocks (PRBs), e.g., 10, 12, 15, 20, or 25 PRBs. The PSCCH may be limited to a single sub-channel. A PSCCH duration may be configured to be 2 symbols or 3 symbols, for example. A sub-channel may include 10, 15, 20, 25, 50, 75, or 100 PRBs, for example. The resources for a sidelink transmission may be selected from a resource pool including one or more subchannels. As a non-limiting example, the resource pool may include between 1-27 subchannels. A PSCCH size may be established for a resource pool, e.g., as between 10-100 % of one subchannel for a duration of 2 symbols or 3 symbols. The diagram 210 in FIG. 2 illustrates an example in which the PSCCH occupies about 50% of a subchannel, as one example to illustrate the concept of PSCCH occupying a portion of a subchannel. The physical sidelink shared channel (PSSCH) occupies at least one subchannel. The PSCCH may include a first portion of sidelink control information (SCI), and the PSSCH may include a second portion of SCI in some examples.

A resource grid may be used to represent the frame structure. Each time slot may include a resource block (RB) (also referred to as physical RBs (PRBs)) that extends 12 consecutive subcarriers. The resource grid is divided into multiple resource elements (REs). The number of bits carried by each RE depends on the modulation scheme. As illustrated in FIG. 2, some of the REs may include control information in PSCCH and some REs may include demodulation RS (DMRS). At least one symbol may be used for feedback. FIG. 2 illustrates examples with two symbols for a physical sidelink feedback channel (PSFCH) with adjacent gap symbols. A symbol prior to and/or after the feedback may be used for turnaround between reception of data and transmission of the feedback. The gap enables a device to switch from operating as a transmitting device to prepare to operate as a receiving device, e.g., in the following slot. Data may be transmitted in the remaining REs, as illustrated. The data may include the data message described herein. The position of any of the data, DMRS, SCI, feedback, gap symbols, and/or LBT symbols may be different than the example illustrated in FIG. 2. Multiple slots may be aggregated together in some aspects.

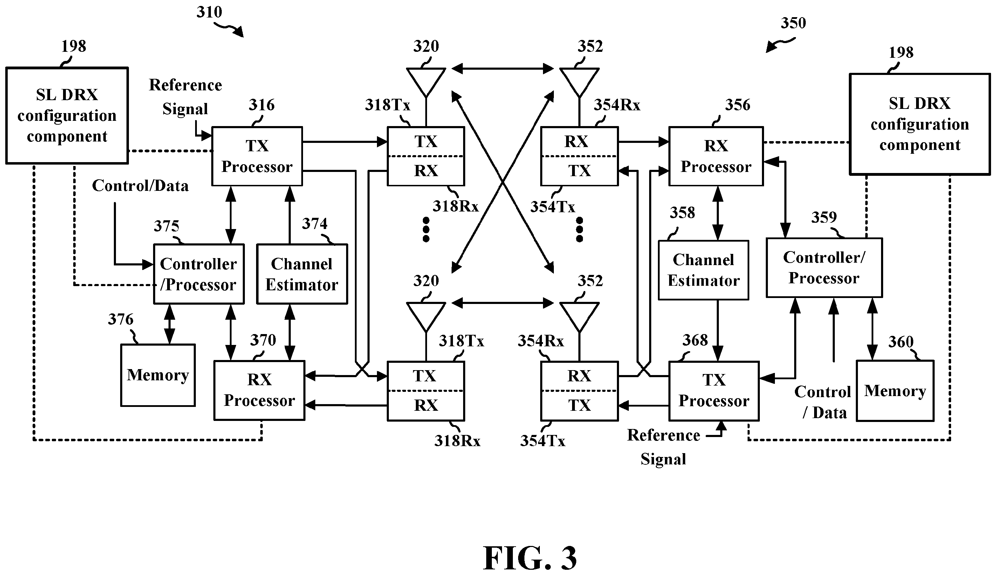

FIG. 3 is a block diagram of a first wireless communication device 310 in communication with a second wireless communication device 350 based on sidelink. In some examples, the devices 310 and 350 may communicate based on V2X or other D2D/ProSe communication. The communication may be based on sidelink using a PC5 interface. The devices 310 and the 350 may include a UE, an RSU, a base station, etc. Packets may be provided to a controller/processor 375 that implements layer 3 and layer 2 functionality. Various layer functionality may include a radio resource control (RRC) layer, and a packet data convergence protocol (PDCP) layer, a radio link control (RLC) layer, and a medium access control (MAC) layer.

The transmit (TX) processor 316 and the receive (RX) processor 370 implement layer 1 functionality associated with various signal processing functions. Layer 1, which includes a physical (PHY) layer, may include error detection on the transport channels, forward error correction (FEC) coding/decoding of the transport channels, interleaving, rate matching, mapping onto physical channels, modulation/demodulation of physical channels, and MIMO antenna processing. The TX processor 316 handles mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols may then be split into parallel streams. Each stream may then be mapped to an OFDM subcarrier, multiplexed with a reference signal (e.g., pilot) in the time and/or frequency domain, and then combined together using an Inverse Fast Fourier Transform (IFFT) to produce a physical channel carrying a time domain OFDM symbol stream. The OFDM stream is spatially precoded to produce multiple spatial streams. Channel estimates from a channel estimator 374 may be used to determine the coding and modulation scheme, as well as for spatial processing. The channel estimate may be derived from a reference signal and/or channel condition feedback transmitted by the device 350. Each spatial stream may then be provided to a different antenna 320 via a separate transmitter 318Tx. Each transmitter 318Tx may modulate an RF carrier with a respective spatial stream for transmission.

At the device 350, each receiver 354Rx receives a signal through its respective antenna 352. Each receiver 354Rx recovers information modulated onto an RF carrier and provides the information to the receive (RX) processor 356. The TX processor 368 and the RX processor 356 implement layer 1 functionality associated with various signal processing functions. The RX processor 356 may perform spatial processing on the information to recover any spatial streams destined for the device 350. If multiple spatial streams are destined for the device 350, they may be combined by the RX processor 356 into a single OFDM symbol stream. The RX processor 356 then converts the OFDM symbol stream from the time-domain to the frequency domain using a Fast Fourier Transform (FFT). The frequency domain signal includes a separate OFDM symbol stream for each subcarrier of the OFDM signal. The symbols on each subcarrier, and the reference signal, are recovered and demodulated by determining the most likely signal constellation points transmitted by device 310. These soft decisions may be based on channel estimates computed by the channel estimator 358. The soft decisions are then decoded and deinterleaved to recover the data and control signals that were originally transmitted by device 310 on the physical channel. The data and control signals are then provided to the controller/processor 359, which implements layer 3 and layer 2 functionality.

The controller/processor 359 can be associated with a memory 360 that stores program codes and data. The memory 360 may be referred to as a computer-readable medium. The controller/processor 359 may provide demultiplexing between transport and logical channels, packet reassembly, deciphering, header decompression, and control signal processing. The controller/processor 359 is also responsible for error detection using an ACK and/or NACK protocol to support HARQ operations.

Similar to the functionality described in connection with the transmission by device 310, the controller/processor 359 may provide RRC layer functionality associated with system information (e.g., MIB, SIBs) acquisition, RRC connections, and measurement reporting; PDCP layer functionality associated with header compression / decompression, and security (ciphering, deciphering, integrity protection, integrity verification); RLC layer functionality associated with the transfer of upper layer PDUs, error correction through ARQ, concatenation, segmentation, and reassembly of RLC SDUs, re-segmentation of RLC data PDUs, and reordering of RLC data PDUs; and MAC layer functionality associated with mapping between logical channels and transport channels, multiplexing of MAC SDUs onto TBs, demultiplexing of MAC SDUs from TBs, scheduling information reporting, error correction through HARQ, priority handling, and logical channel prioritization.

Channel estimates derived by a channel estimator 358 from a reference signal or feedback transmitted by device 310 may be used by the TX processor 368 to select the appropriate coding and modulation schemes, and to facilitate spatial processing. The spatial streams generated by the TX processor 368 may be provided to different antenna 352 via separate transmitters 354Tx. Each transmitter 354Tx may modulate an RF carrier with a respective spatial stream for transmission.

The transmission is processed at the device 310 in a manner similar to that described in connection with the receiver function at the device 350. Each receiver 318Rx receives a signal through its respective antenna 320. Each receiver 318Rx recovers information modulated onto an RF carrier and provides the information to a RX processor 370.

The controller/processor 375 can be associated with a memory 376 that stores program codes and data. The memory 376 may be referred to as a computer-readable medium. The controller/processor 375 provides demultiplexing between transport and logical channels, packet reassembly, deciphering, header decompression, control signal processing. The controller/processor 375 is also responsible for error detection using an ACK and/or NACK protocol to support HARQ operations.

At least one of the TX processor 368, the RX processor 356, and the controller/processor 359 may be configured to perform aspects in connection with the sidelink DRX configuration component 198 of FIG. 1.

Similarly, at least one of the TX processor 316, the RX processor 370, and the controller/processor 375 may be configured to perform aspects in connection with the sidelink DRX configuration component 198 of FIG. 1.

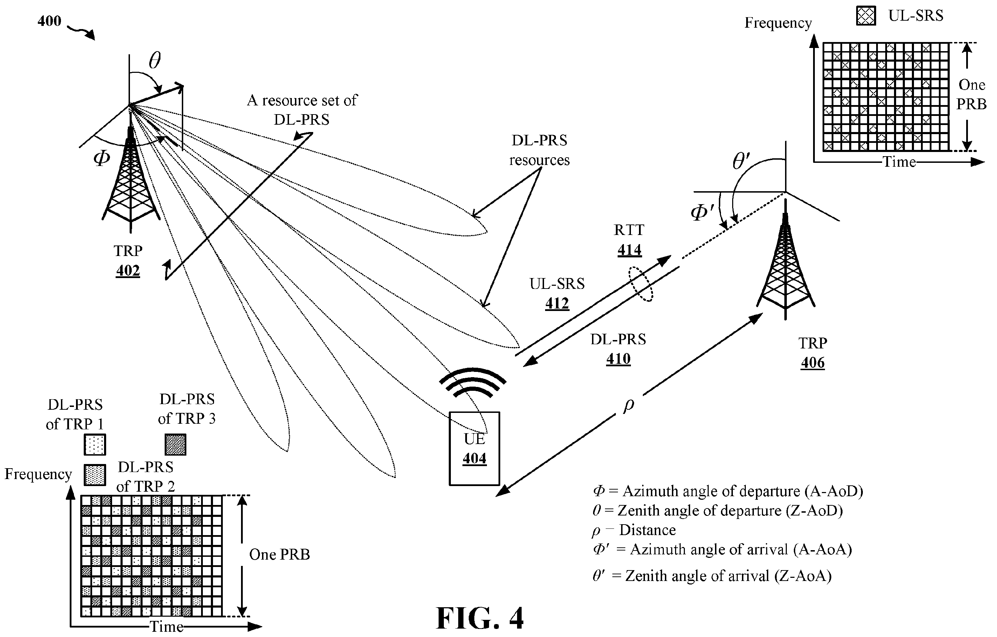

FIG. 4 is a diagram 400 illustrating an example of a UE positioning based on reference signal measurements. The UE 404 may transmit UL-SRS 412 at time T_{SRS_TX} and receive DL positioning reference signals (PRS) (DL-PRS) 410 at time T_{PRS_RX}. The TRP 406 may receive the UL-SRS 412 at time T_{SRS_RX} and transmit the DL-PRS 410 at time T_{PRS_TX}. The UE 404 may receive the DL-PRS 410 before transmitting the UL-SRS 412, or may transmit the UL-SRS 412 before receiving the DL-PRS 410. In both cases, a positioning server (e.g., location server(s)168) or the UE 404 may determine the RTT 414 based on ||T_{SRS_RX} - T_{PRS_TX}| - |T_{SRS_TX} - T_{PRS_RX}||. Accordingly, multi-RTT positioning may make use of the UE Rx-Tx time difference measurements (i.e., |T_{SRS_TX} - T_{PRS_RX}|) and DL-PRS reference signal received power (RSRP) (DL-PRS-RSRP) of downlink signals received from multiple TRPs 402, 406 and measured by the UE 404, and the measured TRP Rx-Tx time difference measurements (i.e., |T_{SRS_RX} - T_{PRS_TX}|) and UL-SRS-RSRP at multiple TRPs 402, 406 of uplink signals transmitted from UE 404. The UE 404 measures the UE Rx-Tx time difference measurements (and optionally DL-PRS-RSRP of the received signals) using assistance data received from the positioning server, and the TRPs 402, 406 measure the gNB Rx-Tx time difference measurements (and optionally UL-SRS-RSRP of the received signals) using assistance data received from the positioning server. The measurements may be used at the positioning server or the UE 404 to determine the RTT, which is used to estimate the location of the UE 404. Other methods are possible for determining the RTT, such as for example using DL-TDOA and/or UL-TDOA measurements.

DL-AoD positioning may make use of the measured DL-PRS-RSRP of downlink signals received from multiple TRPs 402, 406 at the UE 404. The UE 404 measures the DL-PRS-RSRP of the received signals using assistance data received from the positioning server, and the resulting measurements are used along with the azimuth angle of departure (A-AoD), the zenith angle of departure (Z-AoD), and other configuration information to locate the UE 404 in relation to the neighboring TRPs 402, 406.

DL-TDOA positioning may make use of the DL reference signal time difference (RSTD) (and optionally DL-PRS-RSRP) of downlink signals received from multiple TRPs 402, 406 at the UE 404. The UE 404 measures the DL RSTD (and optionally DL-PRS-RSRP) of the received signals using assistance data received from the positioning server, and the resulting measurements are used along with other configuration information to locate the UE 404 in relation to the neighboring TRPs 402, 406.

UL-TDOA positioning may make use of the UL relative time of arrival (RTOA) (and optionally UL-SRS-RSRP) at multiple TRPs 402, 406 of uplink signals transmitted from UE 404. The TRPs 402, 406 measure the UL-RTOA (and optionally UL-SRS-RSRP) of the received signals using assistance data received from the positioning server, and the resulting measurements are used along with other configuration information to estimate the location of the UE 404.

UL-AoA positioning may make use of the measured azimuth angle of arrival (A-AoA) and zenith angle of arrival (Z-AoA) at multiple TRPs 402, 406 of uplink signals transmitted from the UE 404. The TRPs 402, 406 measure the A-AoA and the Z-AoA of the received signals using assistance data received from the positioning server, and the resulting measurements are used along with other configuration information to estimate the location of the UE 404.

Additional positioning methods may be used for estimating the location of the UE 404, such as for example, UE-side UL-AoD and/or DL-AoA. Note that data/measurements from various technologies may be combined in various ways to increase accuracy, to determine and/or to enhance certainty, to supplement/complement measurements, and/or to substitute/provide for missing information.

In some aspects, instead of using DL PRS and UL PRS, SL PRS may be used and the TRP 402 and the TRP 406 may be replaced with other UEs. The UE 404 may accordingly perform positioning based on the SL PRS.

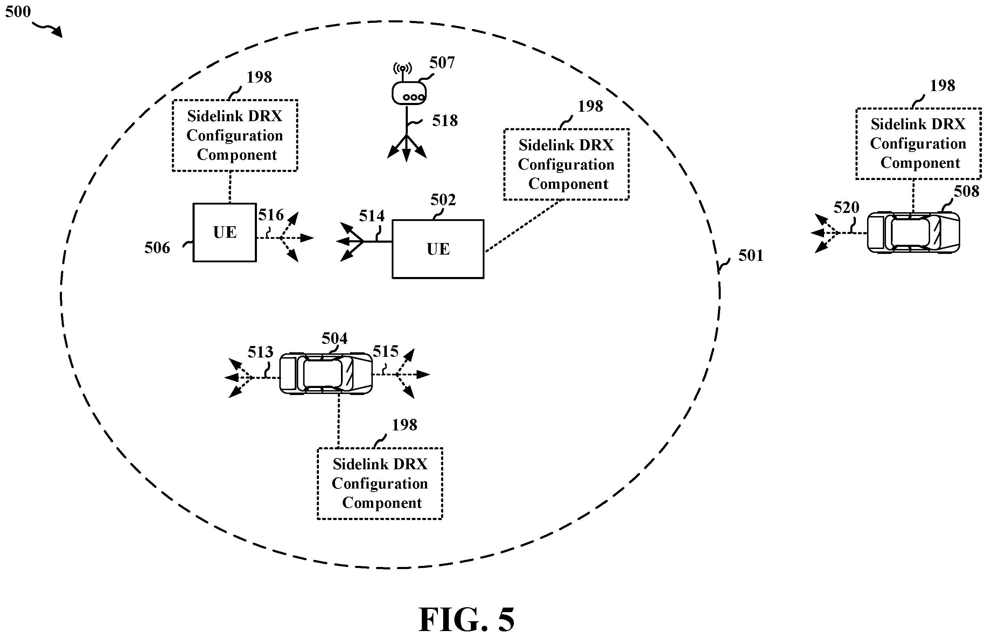

FIG. 5 illustrates an example 500 of sidelink communication between devices. The communication may be based on a slot structure including aspects described in connection with FIG. 2. For example, the UE 502 may transmit a sidelink transmission 514, e.g., including a control channel (e.g., PSCCH) and/or a corresponding data channel (e.g., PSSCH), that may be received by UEs 504, 506, 508. A control channel may include information (e.g., sidelink control information (SCI)) for decoding the data channel including reservation information, such as information about time and/or frequency resources that are reserved for the data channel transmission. For example, the SCI may indicate a number of TTIs, as well as the RBs that will be occupied by the data transmission. The SCI may also be used by receiving devices to avoid interference by refraining from transmitting on the reserved resources. The UEs 502, 504, 506, 508 may each be capable of sidelink transmission in addition to sidelink reception. Thus, UEs 504, 506, 508 are illustrated as transmitting sidelink transmissions 513, 515, 516, 520. The sidelink transmissions 513, 514, 515, 516, 520 may be unicast, broadcast or multicast to nearby devices. For example, UE 504 may transmit transmissions 513, 515 intended for receipt by other UEs within a range 501 of UE 504, and UE 506 may transmit transmission 516. Additionally, or alternatively, RSU 507 may receive communication from and/or transmit communication 518 to UEs 502, 504, 506, 508. One or more of the UEs 502, 504, 506, 508 or the RSU 507 may include a sidelink DRX configuration component 198 as described in connection with FIG. 1.

An SCI may include a first stage SCI (SCI-1) which may be transmitted in a PSCCH, and a second stage of SCI (SCI-2) may be transmitted in a PSSCH. As one example, the SCI-2 may be mapped to contiguous RBs in a PSSCH starting from the first symbol associated with PSSCH DM-RS. A format of the SCI-2 may be indicated in the first stage SCI. The SCI-1 may be transmitted in a PSCCH. A number of resource elements (REs) may be derived based on the SCI-1. A starting location of the SCI-2 may be defined and known to a UE. In some aspects, a UE may not blindly decode SCI-2. An SCI-2 format may include one or more of a HARQ process identifier (ID), a new data indicator (NDI), a source ID, a destination ID, a CSI report trigger, or the like. An SCI-2 format associated with a groupcast may also include a zone ID indicating a location of a transmitter and a communication range for sending feedback. Both SCI-1 and SC_2 may use a polar code (e.g., a PDCCH polar code).

A UE may be configured by a base station for DRX. During an RRC connected state, when there is no data transmission in either direction (UL/DL), the UE may operate using the DRX mode. In the DRX mode, the UE starts monitoring the PDCCH (or other types of transmission such as SCI for sidelink) channel discontinuously using a sleep and wake cycle. When the UE is in an RRC connected state, the DRX may also be referred to as Connected Mode DRX (C-DRX). DRX may conserve battery power at the UE. In a non-DRX mode, the UE monitors for PDCCH in each subframe to check whether there is downlink data available. Continuous monitoring of the PDCCH (or other types of transmission such as SCI for sidelink) may drain the UE's battery power. Although PDCCH is given as an example, sidelink transmissions, such as PSSCH or PSCCH carrying SCI, may also be applicable.

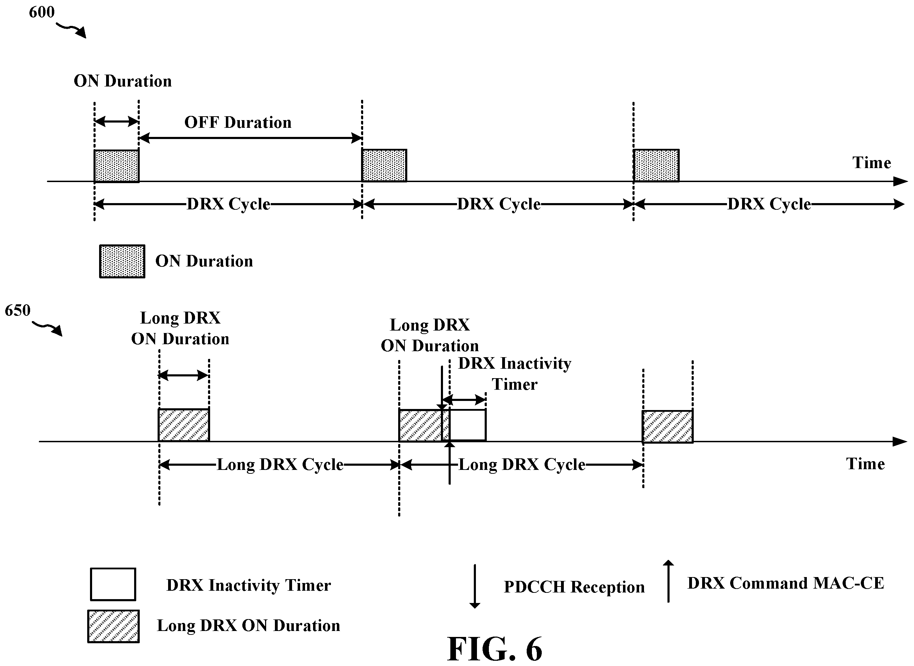

The UE's DRX configuration may be configured by the network using RRC signaling from a base station, such as in an RRC Connection Setup request or an RRC connection reconfiguration request. A DRX configuration may include the configuration of one or more timers and values. In some examples, the DRX configuration may include any of an ON duration timer, a DRX inactivity timer, a DRX retransmission timer, a DRX UL retransmission timer, a long DRX cycle, a value of the DRX start offset, a DRX short cycle timer, and/or a short DRX cycle, among others. A DRX cycle may include a periodic repetition of an ON duration in which the UE monitors for PDCCH (or other types of transmission such as SCI for sidelink) from the base station and an OFF duration. FIG. 6 illustrates an example of a DRX cycle 600 including periodic ON durations during which the UE monitors for PDCCH (or other types of transmission such as SCI for sidelink) and OFF durations during which the UE may not monitor for the PDCCH (or other types of transmission such as SCI for sidelink). During the OFF duration, the UE does not monitor for PDCCH (or other types of transmission such as SCI for sidelink). The UE may enter a sleep mode or a low power mode in which the UE minimizes power consumption by shutting down a radio frequency (RF) function without detecting communication from the base station. The DRX cycle may be the duration of one ON time plus one OFF time. In some aspects, the DRX cycle may be calculated based on the subframe time and a cycle offset. In some aspects, the ON duration timer may be a duration of the ON time within one DRX cycle. A UE in an OFF duration or otherwise not monitoring or receiving a transmission may be referred to as in a "sleep state." The UE in the ON duration or another duration in which the UE may be monitoring and receiving a transmission may be referred to as in a "wake-up state." The "wake-up state" may also be referred to as an "active state" or "extended active state."

The ON duration timer may correspond to a number of consecutive PDCCH (or other types of transmission such as SCI for sidelink) subframes to be monitored or decoded when the UE wakes up from the OFF duration in the DRX Cycle. The DRX retransmission timer may correspond to a consecutive number of PDCCH (or other types of transmission such as SCI for sidelink) subframes for the UE to monitor when a retransmission is expected by the UE. The DRX inactivity timer may correspond to an amount of time before the UE may again enter the OFF duration following successfully decoding PDCCH (or other types of transmission such as SCI for sidelink). The term "inactivity timer" may refer to a timer corresponding to an amount of time that the UE may continue to be monitoring for a transmission after a ON duration upon successfully decoding a PDCCH, an SCI, or a MAC-CE and before entering the OFF duration.

The amount of time may be in terms of a transmission time interval (TTI) duration. After a UE successfully receives downlink data, the DRX inactivity timer may start counting a number of subframes. If uplink or downlink data transmissions occur while the DRX inactivity timer is running, the timer restarts. If the DRX inactivity timer expires without uplink or downlink activity, the UE may enter the DRX cycle to achieve power savings. The UE may start with a short DRX cycle. The DRX short cycle may correspond to a first DRX cycle that the UE enters after successful expiration of DRX inactivity timer. A DRX short cycle timer may correspond to a number of consecutive subframes during which the UE follows the short DRX cycle after the DRX inactivity timer has expired. The UE may further be able to transition to an idle mode DRX based on an RRC inactivity timer. FIG. 6 further illustrates an example 650 showing an example DRX long cycle. The UE may enter a long DRX cycle. The example 650 in FIG. 6 also illustrates an example DRX long cycle.

In some aspects, there may be no PDCCH (or other types of transmission such as SCI for sidelink) received during a DRX cycle. In some aspects, as illustrated in example 650, there may be a PDCCH received during the DRX cycle and the ON time may be extended based on the DRX inactivity timer when the PDCCH (or other types of transmission such as SCI for sidelink) is received. In some aspects, based on a MAC-CE command, the ON time may be extended based on the DRX inactivity timer or less than the DRX inactivity timer.

The amount of power saving achieved by DRX may be improved based on the specific DRX configuration used. In some wireless communication systems, a UE may transmit a set of parameters in over-the air (OTA) UE assistance information (UAI) to the network (by transmitting the UAI to a network entity) indicating the UE's desired values for one or more of the DRX parameters. The set of parameters may include a UE's DRX desire for any of a long cycle, an inactivity timer, a short cycle, a short cycle timer, or the like. The UE's desire may relate to a delay budget, overheating at the UE, DRX configuration, or the like. The UE may transmit the UAI in RRC signaling to the network entity. The UAI may be may be encoded based on Abstract Syntax Notation One (ASN1) and may include the UE's DRX desire that relates to any of a long cycle, an inactivity timer, a short cycle, a short cycle timer, or the like. In some aspects, the DRX parameter for which the UE sends UAI may include any of an ON duration timer, a DRX inactivity timer, a DRX retransmission timer, a DRX UL retransmission timer, a long DRX cycle, a value of the DRX start offset, a DRX short cycle timer, and/or a short DRX cycle, among others. The network entity may approve the requested DRX desire by transmitting an RRC reconfiguration to the UE with the requested DRX parameters after receiving the DRX desire from the UE.

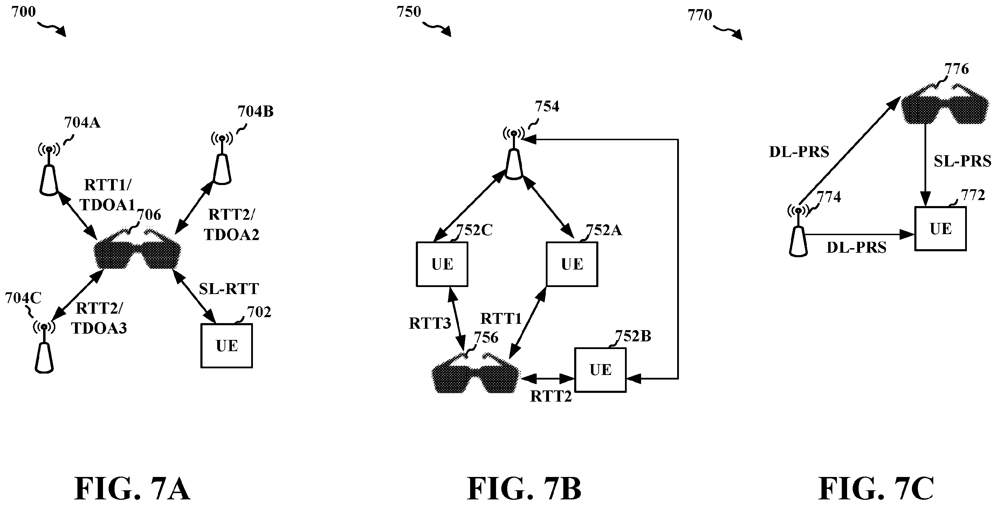

Positioning may be based on sidelink between UEs, access link between network entity and UE, or based jointly on access link and sidelink. FIG. 7A is a diagram 700 illustrating an example of positioning. As illustrated in FIG. 7A, for positioning related to a wireless device 706, a first network entity 704A, a second network entity 704B, and a third network entity 704C may be involved and may each be associated with a respective RTT or TDOA that may be measured. To further improve accuracy of position related to the wireless device 706, a UE 702 (that may be associated with a location known to the network) may serve as an extra anchor for the positioning of the wireless device 706. A sidelink RTT between the UE 702 and the wireless device 706 may be measured. In the diagram 700, sidelink positioning and access link positioning may be used jointly.

FIG. 7B is a diagram 750 illustrating an example of positioning. As illustrated in FIG. 7B, for positioning related to a wireless device 756, a first UE 752A, a second UE 752B, and a third UE 752C may be involved and may each be associated with a respective RTT that may be measured. In the diagram 750, sidelink positioning may be used. Each of the first UE 752A, the second UE 752B, and the third UE 752C may be in communication with a network entity 754.

FIG. 7C is a diagram 770 illustrating an example of positioning. As illustrated in FIG. 7C, for positioning of a UE 772, a network entity 774 may transmit PRS to the UE 772. If the PRS cannot be directly transmitted from the network entity 774 to the UE 772 (such as when the UE 772 is out of coverage), the network entity 774 may transmit the PRS to a wireless device 776 and the wireless device 776 may relay the PRS to the UE 772.

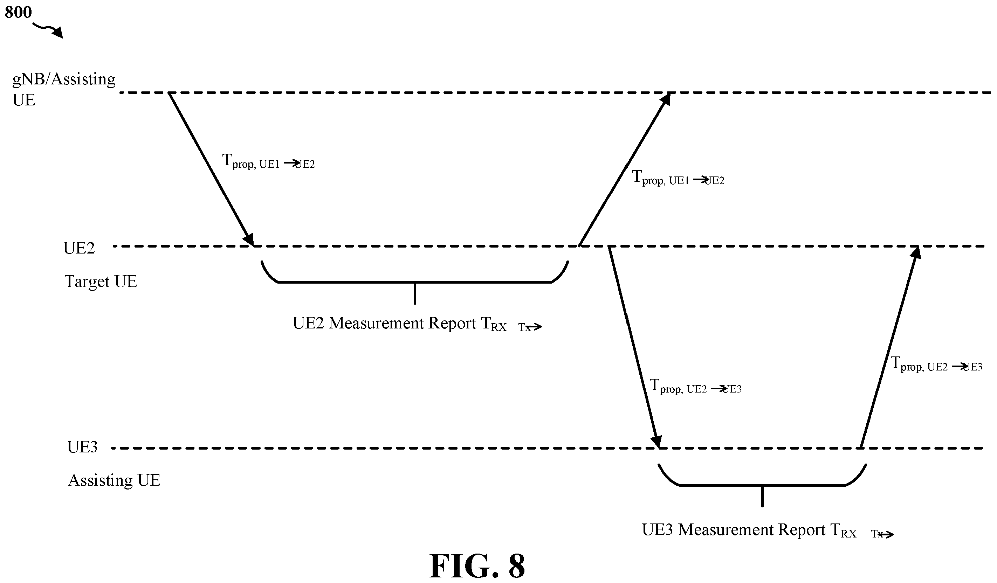

FIG. 8 is a diagram 800 illustrating example procedures for sidelink based positioning. An assisting UE or a network entity may transmit a PRS to a target UE and the target UE may measure a propagation time (e.g., based on Rx-Tx time difference measurements) of the PRS and generate a measurement report. The target UE may transmit a PRS to the assisting UE or the network entity and transmit another PRS to another assisting UE. The other assisting UE may accordingly measure a propagation time of the PRS and generate a measurement report. As such, an assisting UE, and a second assisting UE or a network entity, may collectively contribute in the RTT procedures for the target UE.

Sidelink communication may include direct wireless communication between a first device (e.g., a first UE or other sidelink device) and a second device (e.g., a second UE or other sidelink device), e.g., without being routed by a base station. In a first mode, a UE may receive a resource allocation for sidelink communication from the base station. The sidelink resource allocation from a base station may be referred to as "resource allocation mode 1" or a "centralized" resource allocation mode, e.g., in which a network entity allocates sidelink resources for multiple sidelink devices. Before exchanging communication, sidelink devices may perform a discovery procedure to discover each other. In some wireless communication systems, such as for communication systems supporting mode 2 resource allocation, the discovery procedure may include a first UE (that may be referred to as an announcing UE) that broadcasts the announcement message that is received by a second UE (that may be referred to as a monitoring UE). The discovery procedure, in which the announcing UE broadcasts an announcement message to one or more monitoring UEs, may be referred as mode A sidelink discovery. In another type of discovery procedure, a first UE (that may be referred to as a discoverer UE) sends a solicitation message including a discovery request and a second UE (that may be referred to as a discoveree UE) may receive the request and send a response message. The discovery procedure, in which the discoverer UE transmits a solicitation message including a discovery request to one or more discoveree UEs, may be referred as mode B sidelink discovery.

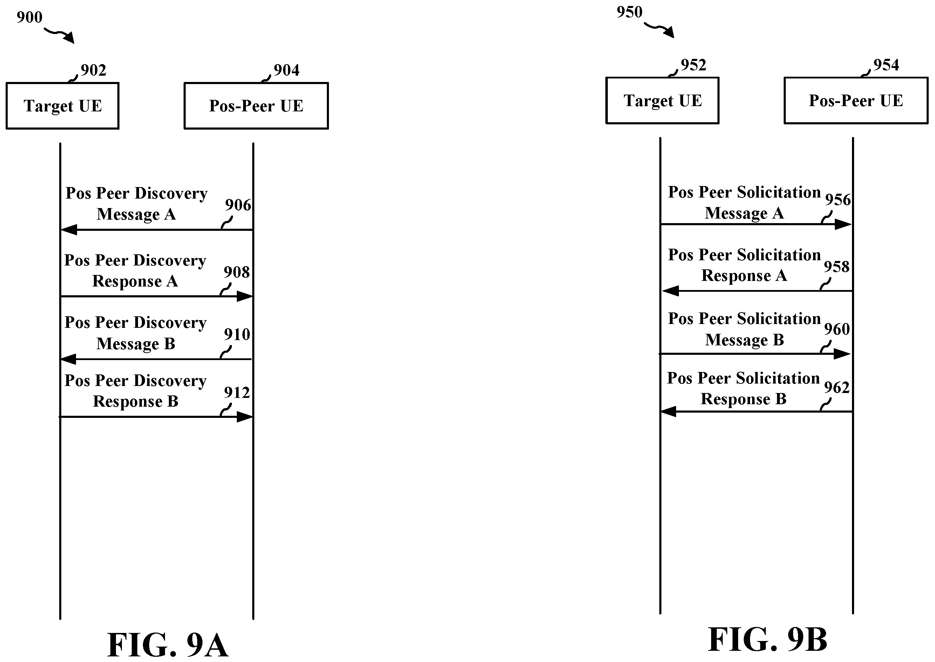

To discover a pos-peer (which may be a peer SL UE for performing positioning), in mode A, a pos-peer UE may announce its presence through transmitting an SL-Pos discovery message with a positioning flag. In mode B, a target UE that wants to discover Pos-Peer UEs may initiate with an SL-Pos solicitation message with field(s) related to positioning. FIG. 9A is a diagram 900 illustrating an example of pos-peer selection procedures of SL cooperative positioning in mode A. As illustrated in FIG. 9A, a pos-peer UE 904 may transmit a pos-peer discovery message A 906 to a target UE 902. Upon receiving the pos-peer discovery message A 906, the target UE 902 may transmit a pos-peer discovery response A 908 to the pos-peer UE 904. The pos-peer UE 904 may also transmit a pos-peer discovery message B 910 to the target UE 902. Upon receiving the pos-peer discovery message B 910, the target UE 902 may transmit a pos-peer discovery response B 912 to the pos-peer UE 904 to complete the discovery process, and sidelink positioning may be performed between the target UE 902 and the pos-peer UE 904.

FIG. 9B is a diagram 950 illustrating an example of pos-peer selection procedures of SL cooperative positioning in mode B. As illustrated in FIG. 9B, a target UE 952 may transmit a pos-peer solicitation message A 956 to a pos-peer UE 954. Upon receiving the pos-peer solicitation message A 956, the pos-peer UE 954 may transmit a pos-peer solicitation response message A 958 to the target UE 952. The target UE 952 may also transmit a pos-peer solicitation message B 960 to the pos-peer UE 954. Upon receiving the pos-peer solicitation message B 960, the pos-peer UE 954 may transmit a pos-peer solicitation response message B 962 to the target UE 952 to complete the discovery process, and sidelink positioning may be performed between the target UE 952 and the pos-peer UE 954.

Both sidelink positioning discovery and solicitation messages can be split in 2 parts to enable a more power efficient approach and a handshake between the target UEs and the potential pos-peer UEs. A target UE may rank potential pos-peer UEs based on one or more of: anchor's Location quality criterion, channel quality criterion, response time criterion, or mobility state criterion.

An SL DRX configuration may be unicasted based on the negotiation between UEs. The SL DRX configuration may also be groupcasted or broadcasted based on quality of service (QoS) and layer 2 (L2) destination identifier (ID). When unicasted, a SL DRX configuration may include a ON timer, an inactivity timer, a HARQ RTT timer and HARQ retransmission timer, and an SL DRX Command MAC CE. When groupcasted, an SL DRX configuration may include a ON timer, an inactivity timer, a HARQ RTT timer, and a HARQ retransmission timer. When broadcasted, an SL DRX configuration may include a ON timer. The SL DRX configuration may also include a Tx profile indicating support of SL DRX. The SL DRX configuration may also include a Rx UE's active time to indicate Rx UE's active time to PHY layer. The SL DRX configuration may also be associated with non-relay-related ProSe for supporting ProSe communication and ProSe discovery and L3 relay-related ProSe for L3 relay-related ProSe communication and discovery. The SL DRX configuration may also include a UE capability indicating capability for using non-SL DRX for SL operations and using SL DRX configuration for non-SL (such as UL/DL) communications. The term "SL DRX configuration" may refer to a DRX configuration for positioning or non-positioning SL communications between UEs.

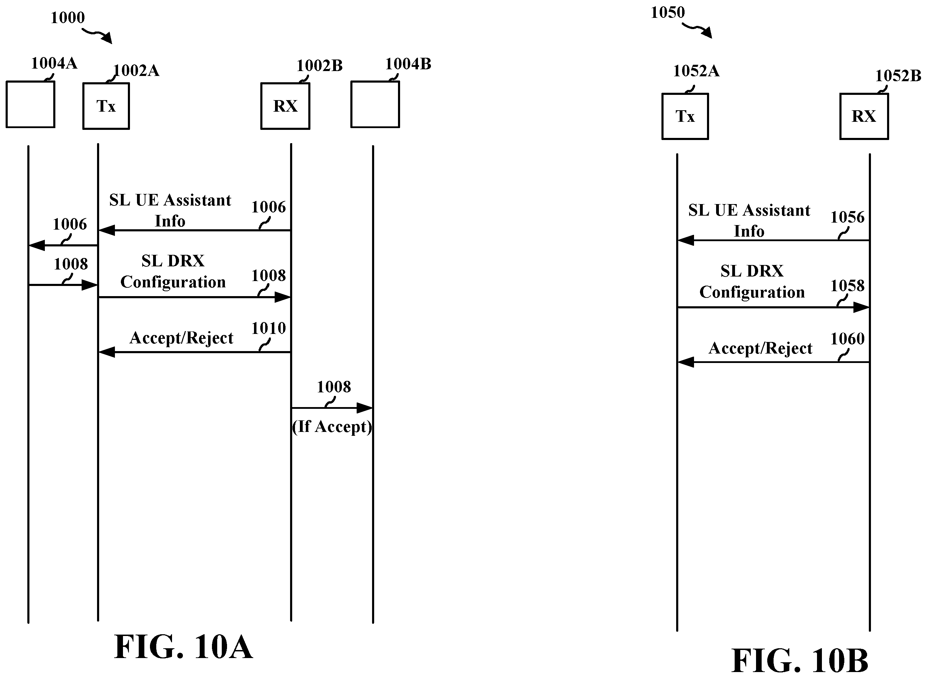

FIG. 10A is a diagram 1000 illustrating an example of SL DRX in mode 1 and in RRC connected. As illustrated in FIG. 10A, a Tx UE 1002A may receive a recommended SL DRX configuration 1006 of the Rx UE 1002B in SL UE assistant information from the Rx UE 1002B. The Tx UE 1002A may forward the recommended SL DRX configuration 1006 to the network entity 1004A serving the Rx UE 1002A, and the network entity 1004A may determine the SL DRX configuration 1008, which may be the same as or different from the SL DRX configuration 1006. The Tx UE 1002A may forward the SL DRX configuration 1008 to the Rx UE 1002B. The Rx UE 1002B may accept or reject the SL DRX configuration 1008 by transmitting accept/reject 1010. If the Rx UE 1002B accepts the SL DRX configuration 1008, the Rx UE 1002B may forward the SL DRX configuration 1008 to the network entity 1004B serving the Rx UE 1002B.

FIG. 10B is a diagram 1050 illustrating an example of SL DRX in mode 1 and in RRC inactive and RRC idle, or in mode 2. As illustrated in FIG. 10B, a Tx UE 1052A may receive a recommended SL DRX configuration 1056 of the Rx UE 1052B in SL UE assistant information from the Rx UE 1052B. The Tx UE 1002A may determine the SL DRX configuration 1058, which may be the same as or different from the SL DRX configuration 1056. The Tx UE 1052A may forward the SL DRX configuration 1058 to the Rx UE 1052B. The Rx UE 1002B may accept or reject the SL DRX configuration 1058 by transmitting accept/reject 1060.

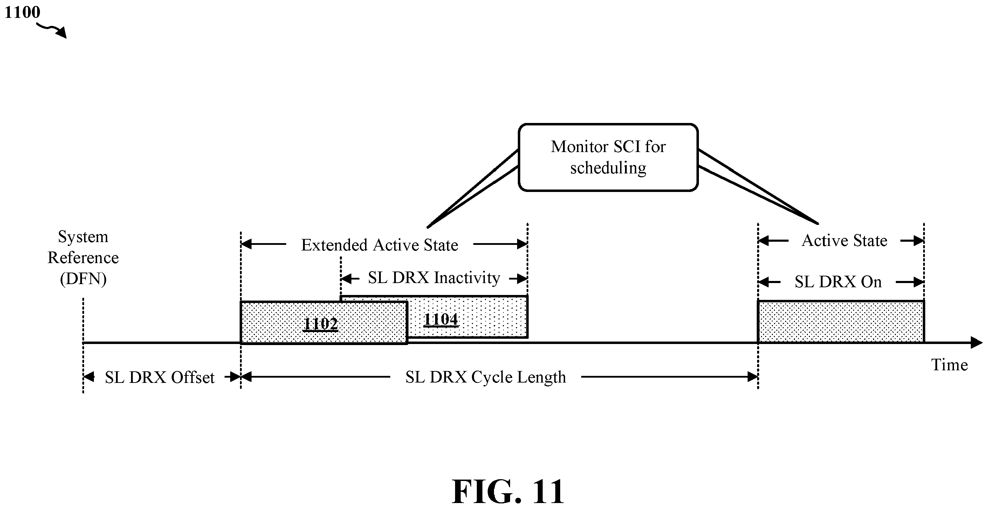

An SL DRX configuration may be based on QoS profile(s) for an L2 destination ID. In case of multiple QoS profiles, in the SL DRX configuration, an SL DRX Cycle length may be a minimum cycle length among cycle lengths associated with the multiple QoS profiles, an SL DRX ON timer may be based on a maximum SL DRX ON timer among SL DRX ON timers associated with the multiple QoS profiles, and an SL DRX inactivity timer may be a maximum SL DRX inactivity timer among SL DRX inactivity timers associated with the multiple QoS profiles. FIG. 11 is a diagram 1100 illustrating an example of SL DRX configuration. A UE may enter a DRX ON duration 1102 and may monitor for an SCI. Upon receiving an SCI indicating or scheduling a subsequent transmission, the UE may initiate a SL DRX inactivity timer 1104 and continue to wake-up before SL DRX inactivity timer 1104 expires. In some aspects, a UE may be configured with a common default Sidelink DRX configuration. In some aspects, the common default Sidelink DRX configuration may be default SL DRX configuration for QoS profile which cannot be mapped to DRX configuration configured for the dedicated QoS profile(s). In some aspects, when a UE is in-coverage, if the UE is in an RRC connected state, the UE may be configured with a SL DRX configuration for groupcast and broadcast based on SIB 12 on dedicated RRC (e.g., dedicated RRC for handover). In some aspects, when a UE is in-coverage, if the UE is in an RRC inactive/idle state, the UE may be configured with a SL DRX configuration for groupcast and broadcast based on SIB 12. In some aspects, if the UE is out of coverage, the UE may be configured with a SL DRX configuration before the UE is out of coverage.

In some aspects, a UE may maintain separate inactivity timer for each L2 Destination ID. In some aspects, for unicast, an SL DRX inactivity timer may be configured for each pair of L2 source and destination ID. In some aspects, for groupcast, a UE (e.g., a RX UE) may maintain a separate inactivity timer for each L2 destination ID. In some aspects, the UE may (re)start the inactivity timer upon reception of SCI (first slot after SCI) associated with a new SL data transmission and the UE may be active on SL as long as at least one of the SL inactivity timers associated with unicast or groupcast is running. In some aspects, for a Tx UE, for unicast, TX UE maintains a timer corresponding to the SL inactivity timer in the RX UE for each pair of L2 source and destination ID (used for determining the allowable transmission time). A Tx UE may (re)start its timer corresponding to the SL inactivity timer at the Rx UE at the slot following an SCI transmission indicating a new data transmission. In some aspects, for groupcast, the Tx UE may restart inactivity timer for the L2 destination ID (used for determining the allowable transmission time) upon reception of new data with the same destination ID. In some aspects, the Tx UE may not restart the inactivity timer upon transmission of an SCI indicating a retransmission.

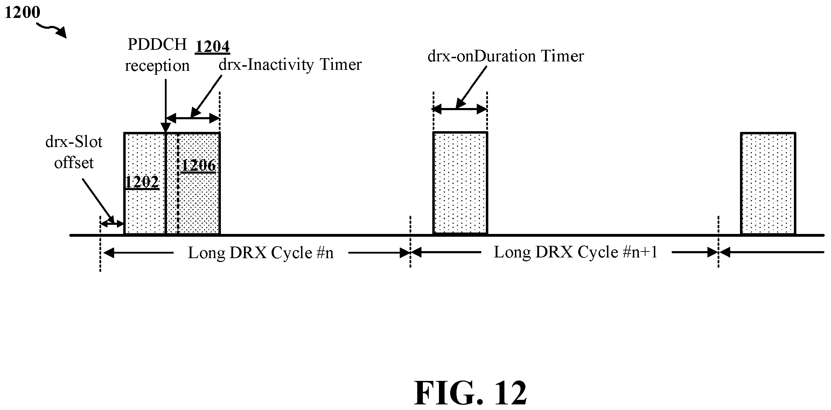

FIG. 12 is a diagram 1200 illustrating an example of SL DRX configuration. As illustrated in 1200, the UE may enter a long DRX cycle. The UE may enter a DRX ON duration 1202 to monitor for and receive a PDCCH. Upon receiving the PDCCH 1204, the UE may initiate a DRX inactivity timer 1206 and continue in the wake-up state until the DRX inactivity timer 1206 expires.

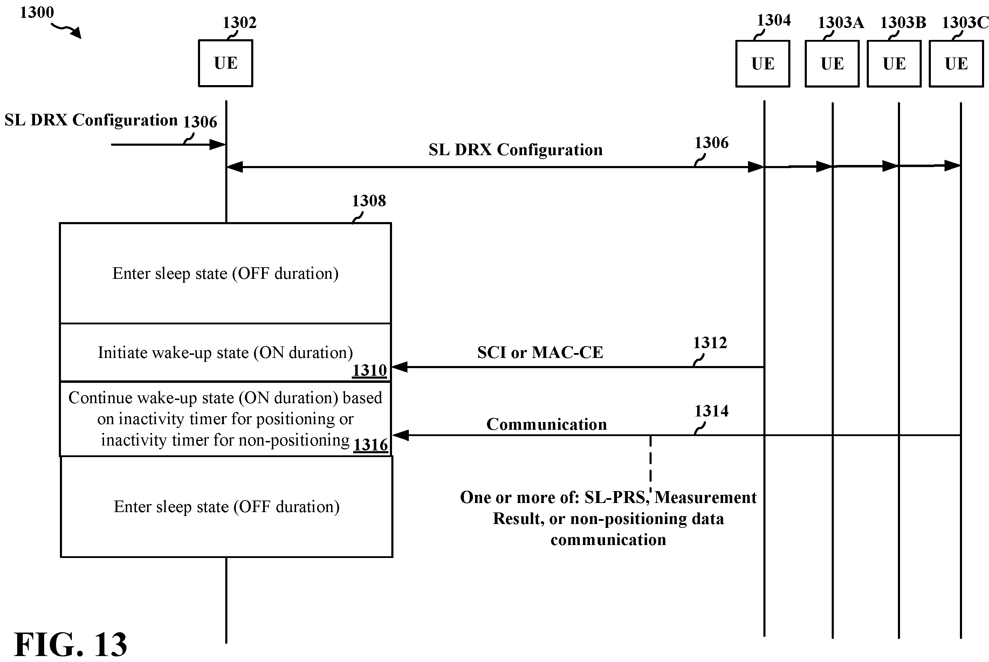

FIG. 13 is a diagram 1300 illustrating example communications between a UE 1302, a UE 1304 (such as an assisting UE), and one or more other UEs including UE 1303A, UE 1303B, and UE 1303C which may also be included in some aspects. In some aspects, the one or more other UEs are not included. In some aspects, the UE 1302 may be configured with an SL DRX configuration 1306. In some aspects, the UE 1302 may receive an SL DRX configuration 1306 from the UE 1304. In some aspects, the SL DRX configuration 1306 may be an SL DRX configuration recommended by the UE 1304, which may be accepted or rejected by the UE 1302 (in some aspects with confirmation from the network (e.g., as described in connection with FIG. 10A) and in some other aspects independent of network confirmation (e.g., as described in connection with FIG. 10B)). In some aspects, the SL DRX configuration 1306 may be selected by the UE 1302 and transmitted to the UE 1304. The UE 1304 may accept or reject the SL DRX configuration 1306 (in some aspects with confirmation from the network (e.g., as described in connection with FIG. 10A) and in some other aspects independent of network confirmation (e.g., as described in connection with FIG. 10B)). In some aspects, the SL DRX configuration 1306 may also be transmitted to one or more other UEs including UE 1303A, UE 1303B, and UE 1303C.

In some aspects, the SL DRX configuration 1306 may include two inactivity timers, a first inactivity timer associated with non-positioning communications and a second inactivity timer associated with positioning communications. As used herein, the term "non-positioning communications" may refer to data communications that are not part of a positioning session. As used herein, the term "positioning communications" may refer to communications that are part of a positioning session, such as PRS or measurement results. The SL DRX configuration 1306 may also include, by way of example, a cycle length, a ON timer, a retransmission timer, a RTT timer, or other parameters that may be included in an SL DRX configuration. At 1308, the UE 1302 may enter a sleep state (e.g., in an OFF duration) based on the SL DRX configuration 1308. At 1310, the UE 1302 may enter a wake-up state (e.g., in an ON duration). In some aspects, during the wake-up state, the UE 1302 may receive a message 1312, such as a SCI (e.g., SCI-1) or a MAC-CE associated with (e.g., such as scheduling or indicating) a subsequent communication 1314. In some aspects, to receive the subsequent communication 1314, the UE 1302 may continue in the wake-up state (in the ON duration) at 1316 based on the first inactivity timer or the second inactivity timer. The second inactivity timer may also be referred to as a "positioning inactivity timer." In some aspects, if the message 1312 indicates that the subsequent communication 1314 includes positioning communications without non-positioning communications, the UE 1302 may continue in the wake-up state (in the ON duration) at 1316 based on the second inactivity timer. In some aspects, if the message 1312 indicates that the subsequent communication 1314 includes non-positioning communications without positioning communications, the UE 1302 may continue in the wake-up state (in the ON duration) at 1316 based on the first inactivity timer. In some aspects, if the message 1312 indicates that the subsequent communication 1314 includes non-positioning communications and positioning communications, the UE 1302 may continue in the wake-up state (in the ON duration) at 1316 based on the first inactivity timer. In some aspects, if the message 1312 indicates that the subsequent communication 1314 includes non-positioning communications and positioning communications, the UE 1302 may continue in the wake-up state (in the ON duration) at 1316 based on a larger one of the first inactivity timer and the second inactivity timer. In some aspects, other than receiving the communication 1314, the UE 1302 may also transmit an SL-PRS after receiving the message 1312.

In some aspects, the first inactivity timer or the second inactivity timer may reset after a PRS (e.g., such as a PRS in the communication 1314) is received. In some aspects, the PRS that may trigger the reset of the first inactivity timer or the second inactivity timer may be scheduled or indicated by a PSCCH or PSSCH (e.g., including higher layer messages) for a positioning session (e.g., between at least the UE 1302 and the UE 1304). In some aspects, the second inactivity timer may be applied to each positioning session (e.g., associated with a destination ID, source/destination ID pair, session ID, or the like). In some aspects, a value of the second inactivity timer may also be based on a priority of the positioning session.

Being configured with two inactivity timers, the UE 1302 may wake-up for different durations based on whether an upcoming transmission is for positioning or not. For example, for subsequent non-positioning data communications, the UE 1302 may wake up for greater than 20 milliseconds. For subsequent positioning communications, the UE 1302 may wake up for less than 3 milliseconds. Therefore, aspects provided herein may enable a UE to save power by enabling a UE configured with SL DRX to flexibly wake-up in based on a type of the subsequent communication.

In some aspects, the UE 1302 may be aware of the content in the communication 1314 and may be waiting to receive the content accordingly. For example, the UE 1302 may be waiting for SL-PRS from the UE 1304 and one or more other UEs including the UE 1303A, the UE 1303B, and the UE 1303C. In some aspects, the UE 1302 may be waiting for SL-PRS and measurement results from the UE 1304 and one or more other UEs including the UE 1303A, the UE 1303B, and the UE 1303C. In some aspects, the UE 1302 may be waiting for measurement results from the UE 1304 and one or more other UEs including the UE 1303A, the UE 1303B, and the UE 1303C. In some aspects, the UE 1302 may extend the continue to wake-up (and accordingly extend the first inactivity timer or the second inactivity timer) at 1306 after receiving the content (e.g., the SL-PRS or the measurement results from the UE 1304 and one or more other UEs including the UE 1303A, the UE 1303B, and the UE 1303C).

In some aspects, if the UE 1302 is in communication with the UE 1304 and one or more other UEs including the UE 1303A, the UE 1303B, and the UE 1303C via groupcast, the UE 1302 may be waiting for content (e.g., the SL-PRS or the measurement results) from the UE 1304 and the one or more other UEs including the UE 1303A, the UE 1303B, and the UE 1303C. In some aspects, the UE 1302 may extend the continue to wake-up (and accordingly extend the first inactivity timer or the second inactivity timer) at 1306 to wait for content (e.g., the SL-PRS or the measurement results) from the UE 1304 and the one or more other UEs including the UE 1303A, the UE 1303B, and the UE 1303C. In some aspects, a maximum time may be configured for the UE 1302 where the UE 1302 may not continue to wake-up (and accordingly extend the first inactivity timer or the second inactivity timer) by more than the maximum time. In some aspects, the UE 1302 may be configured with a minimum number (e.g., corresponding to a number of UEs) such that the UE may stop waiting for content (e.g., the SL-PRS or the measurement results) from the UE 1304 and the one or more other UEs including the UE 1303A, the UE 1303B, and the UE 1303C and stop to wake-up (and accordingly extend the first inactivity timer or the second inactivity timer) after a minimum number of SL PRS or measurement results are received. In some aspects, the maximum time and the minimum number may be configured by a network entity. In some aspects, the maximum time and the minimum number may be configured by the UE 1304. In some aspects, the maximum time and the minimum number may be configured without signaling from the network or the UE 1304.

In some aspects, the second inactivity timer may be based on (e.g., may be a function of) a positioning QoS (e.g., associated with a response time parameter, an accuracy parameter, or the like) for the positioning session.

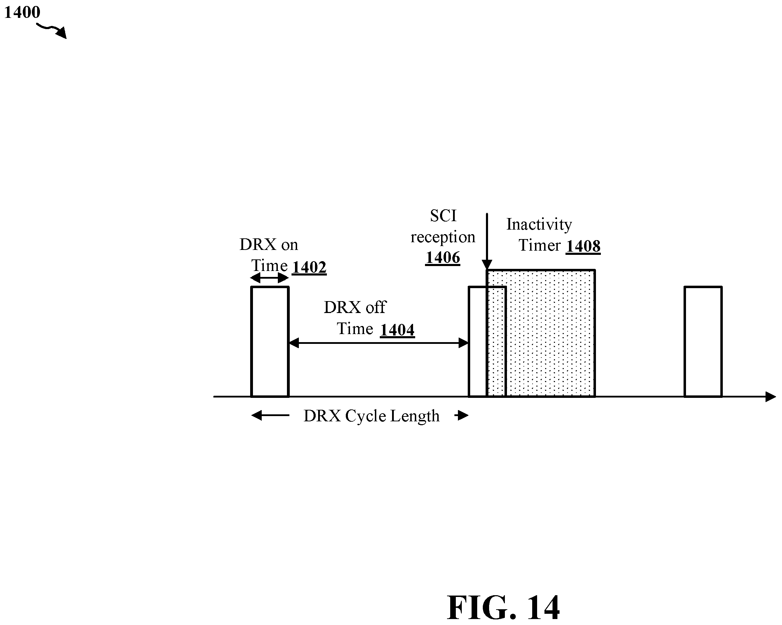

FIG. 14 is a diagram 1400 illustrating an example of SL DRX configuration. As illustrated in FIG. 14, the SL DRX configuration may configure DRX ON time (e.g., DRX ON time 1402) and DRX OFF time (e.g., DRX OFF time 1404). Upon receiving SCI (e.g., SCI reception at 1406), the UE may start an inactivity timer 1408 and continue to monitor and receive a subsequent SL data transmission before the inactivity timer 1408 expires. The UE may be active (which may also be referred to in a wake-up state) on the SL as long as at least one of the SL inactivity timers associated with unicast or broadcast is running. In some aspects, inactivity timer may be configured for between zero to 2560 milliseconds.

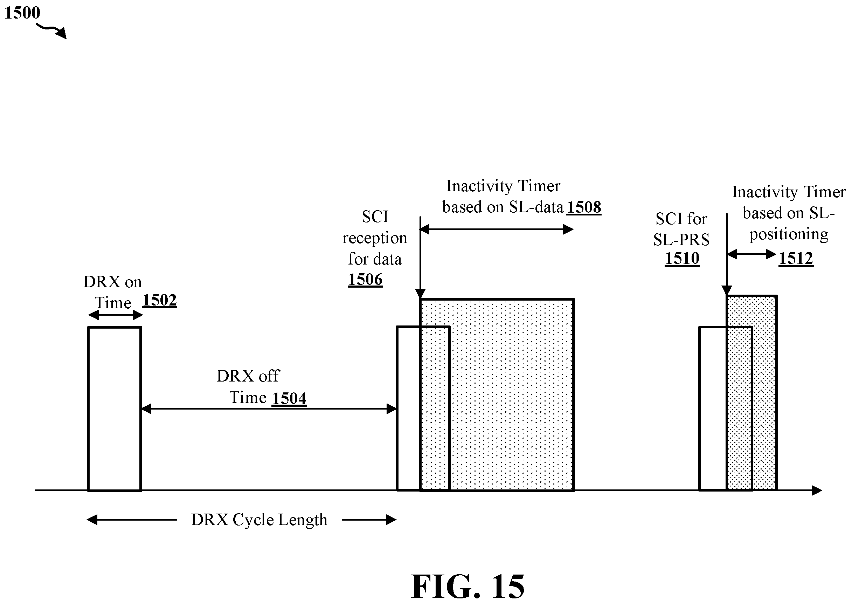

FIG. 15 is a diagram 1500 illustrating an example of SL DRX configuration. As illustrated in FIG. 15, the SL DRX configuration may configure DRX ON time (e.g., DRX ON time 1502) and DRX OFF time (e.g., DRX OFF time 1504). Upon receiving SCI scheduling/indicating non-position data communication (e.g., SCI reception at 1506), the UE may start a first inactivity timer 1508 and continue to monitor and receive a subsequent non-positioning SL data transmission before the first inactivity timer 1508 expires. The UE may be active (which may also be referred to in a wake-up state) on the SL as long as at least one of the SL inactivity timers associated with unicast or broadcast is running. In some aspects, the first inactivity timer may be configured for between zero to 2560 milliseconds and may be long enough for non-positioning data reception. Upon receiving SCI scheduling/indicating positioning communication (e.g., SCI reception at 1510), the UE may start a second inactivity timer 1512 and continue to monitor and receive a subsequent non-positioning SL data transmission before the second inactivity timer 1512 expires. In some aspects, the second inactivity timer may be configured for between zero to 10 milliseconds and may be long enough for positioning data reception. By having separate inactivity timers, the UE may save more power.

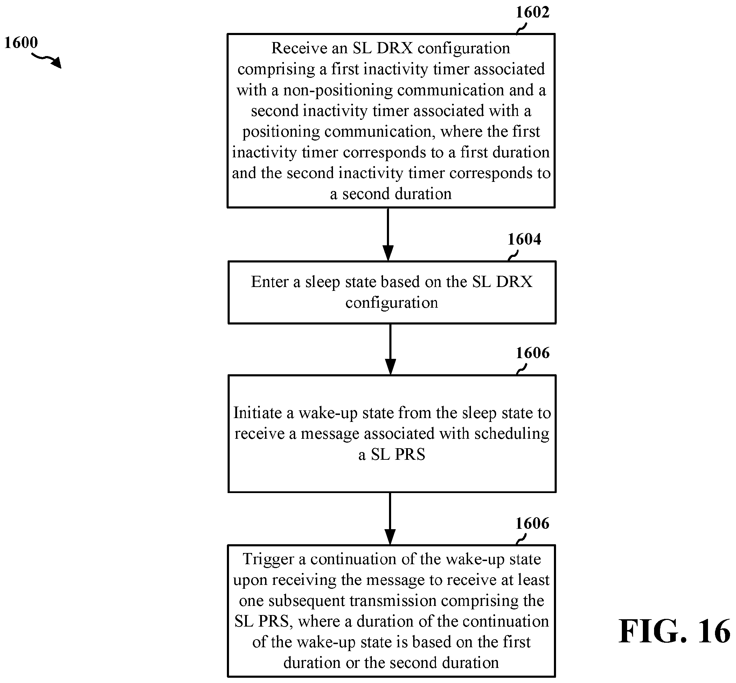

FIG. 16 is a flowchart 1600 of a method of wireless communication. The method may be performed by a UE (e.g., the UE 104, the UE 1302; the apparatus 1804).

At 1602, the UE may receive an SL DRX configuration including a first inactivity timer associated with a non-positioning communication and a second inactivity timer associated with a positioning communication, where the first inactivity timer corresponds to a first duration and the second inactivity timer corresponds to a second duration. For example, the UE 1302 may receive an SL DRX configuration 1306 including a first inactivity timer associated with a non-positioning communication and a second inactivity timer associated with a positioning communication, where the first inactivity timer corresponds to a first duration and the second inactivity timer corresponds to a second duration. In some aspects, 1602 may be performed by the SL DRX configuration component 198.

At 1604, the UE may enter a sleep state based on the SL DRX configuration. For example, the UE 1302 may enter a sleep state (e.g., at 1308) based on the SL DRX configuration. In some aspects, 1604 may be performed by the SL DRX configuration component 198.

At 1606, the UE may initiate a wake-up state from the sleep state to receive a message associated with scheduling a SL PRS. For example, the UE 1302 may initiate a wake-up state (e.g., at 1310) from the sleep state to receive a message (e.g., 1312) associated with scheduling a SL PRS. In some aspects, 1606 may be performed by the SL DRX configuration component 198. In some aspects, the second inactivity timer is based on one or more of: a positioning QoS associated with the positioning communication, a response time parameter associated with the positioning QoS, or an accuracy parameter associated with the positioning QoS.

At 1608, the UE may trigger a continuation of the wake-up state upon receiving the message to receive at least one subsequent transmission including the SL PRS, where a duration of the continuation of the wake-up state is based on the first duration or the second duration. The term "continuation of the wake-up state" may refer to continuing to monitor or receive a transmission outside the DRX ON duration. For example, the UE 1302 may trigger a continuation (e.g., at 1316) of the wake-up state upon receiving the message to receive at least one subsequent transmission (e.g., 1314) including the SL PRS, where a duration of the continuation of the wake-up state is based on the first duration or the second duration. In some aspects, the UE may trigger the continuation and may start counting down the first inactivity timer or the second inactivity timer upon receiving the message, and the UE may continue in the wake-up state until the first inactivity timer or the second inactivity timer expires. In some aspects, 1608 may be performed by the SL DRX configuration component 198. In some aspects, the continuation is based on the second inactivity timer when the at least one subsequent transmission includes the SL PRS without non-positioning-related data. In some aspects, the continuation is based on the first inactivity timer when the at least one subsequent transmission includes the SL PRS and non-positioning-related data. In some aspects, the continuation is based on a larger one of the first duration or the second duration when the at least one subsequent transmission includes the SL PRS and non-positioning-related data. In some aspects, the first inactivity timer or the second inactivity timer resets upon receiving the SL PRS. In some aspects, the SL PRS is scheduled or indicated by a PSCCH or a PSSCH for a positioning session associated with the positioning communication. In some aspects, the second inactivity timer is associated with a positioning session associated with the positioning communication, where the positioning session is associated with a destination identifier, a source and destination identifier pair, or a session identifier.

In some aspects, the UE may also receive an indication representing content to be received in the at least one subsequent transmission or determine the content to be received in the at least one subsequent transmission based on a second configuration. In some aspects, the content includes the SL PRS. In some aspects, the content includes the SL PRS and a set of measurement results associated with a set of UEs. In some aspects, the content includes a set of measurement results associated with a set of UEs without the SL PRS. In some aspects, the UE may also trigger the continuation of the wake-up state after the first duration or the second duration upon receiving a subset of the content. In some aspects, the content includes a set of measurement results associated with a set of UEs, and the UE may trigger the continuation of the wake-up state after the first duration or the second duration upon receiving a first subset of the content, where the continuation is triggered until a maximum time or until receiving a second subset of the content including a minimum number of measurement results in the set of measurement results. In some aspects, the second inactivity timer is based on one or more of: a positioning QoS associated with the positioning communication, a response time parameter associated with the positioning QoS, or an accuracy parameter associated with the positioning QoS.

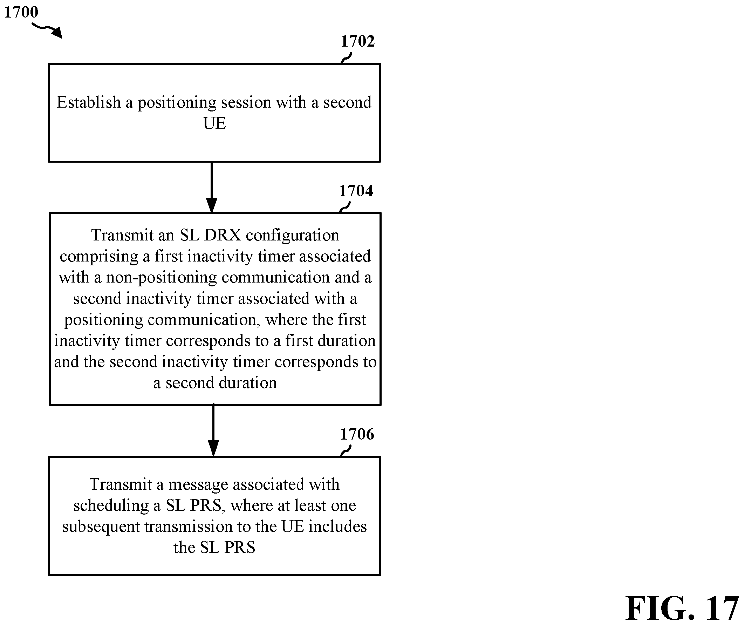

FIG. 17 is a flowchart 1700 of a method of wireless communication. The method may be performed by a UE (e.g., the UE 104, the UE 1304; the apparatus 1804).

At 1702, the UE may establish a positioning session with a second UE. For example, the UE 1304 may establish a positioning session with a second UE 1302. In some aspects, 1702 may be performed by the SL DRX configuration component 198.

At 1704, the UE may transmit an SL DRX configuration including a first inactivity timer associated with a non-positioning communication and a second inactivity timer associated with a positioning communication, where the first inactivity timer corresponds to a first duration and the second inactivity timer corresponds to a second duration. For example, the UE 1304 may transmit an SL DRX configuration 1306 including a first inactivity timer associated with a non-positioning communication and a second inactivity timer associated with a positioning communication, where the first inactivity timer corresponds to a first duration and the second inactivity timer corresponds to a second duration. In some aspects, 1704 may be performed by the SL DRX configuration component 198. In some aspects, the second inactivity timer is associated with the positioning session, where the positioning session is associated with a destination identifier, a source and destination identifier pair, or a session identifier. In some aspects, the second inactivity timer is based on one or more of: a positioning QoS associated with the positioning communication, a response time parameter associated with the positioning QoS, or an accuracy parameter associated with the positioning QoS.

At 1706, the UE may transmit a message associated with scheduling a SL PRS, where at least one subsequent transmission to the UE includes the SL PRS. For example, the UE 1304 may transmit a message (e.g., 1312) associated with scheduling a SL PRS, where at least one subsequent transmission (e.g., 1314) to the UE includes the SL PRS. In some aspects, 1706 may be performed by the SL DRX configuration component 198. In some aspects, the message is SCI or a MAC-CE.

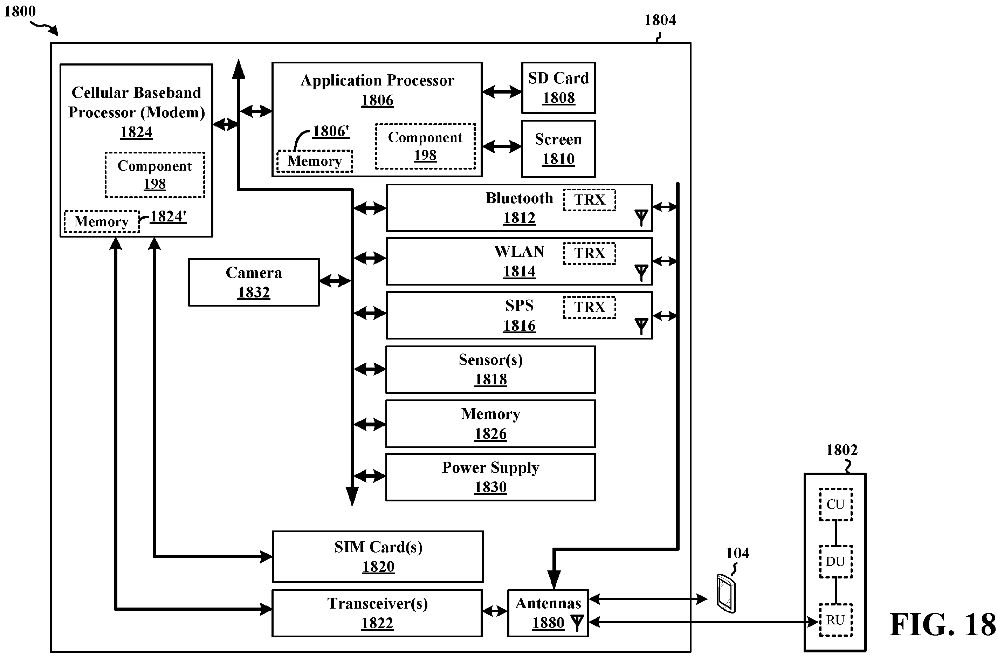

FIG. 18 is a diagram 1800 illustrating an example of a hardware implementation for an apparatus 1804. The apparatus 1804 may be a UE, a component of a UE, or may implement UE functionality. In some aspects, the apparatus1804 may include a cellular baseband processor 1824 (also referred to as a modem) coupled to one or more transceivers 1822 (e.g., cellular RF transceiver). The cellular baseband processor 1824 may include on-chip memory 1824'. In some aspects, the apparatus 1804 may further include one or more subscriber identity modules (SIM) cards 1820 and an application processor 1806 coupled to a secure digital (SD) card 1808 and a screen 1810. The application processor 1806 may include on-chip memory 1806'. In some aspects, the apparatus 1804 may further include a Bluetooth module 1812, a WLAN module 1814, a satellite system module 1816 (e.g., GNSS module), one or more sensor modules 1818 (e.g., barometric pressure sensor / altimeter; motion sensor such as inertial management unit (IMU), gyroscope, and/or accelerometer(s); light detection and ranging (LIDAR), radio assisted detection and ranging (RADAR), sound navigation and ranging (SONAR), magnetometer, audio and/or other technologies used for positioning), additional memory modules 1826, a power supply 1830, and/or a camera 1832. The Bluetooth module 1812, the WLAN module 1814, and the satellite system module 1816 may include an on-chip transceiver (TRX) / receiver (RX). The cellular baseband processor 1824 communicates through the transceiver(s) 1822 via one or more antennas 1880 with the UE 104 and/or with an RU associated with a network entity 1802. The cellular baseband processor 1824 and the application processor 1806 may each include a computer-readable medium / memory 1824', 1806', respectively. The additional memory modules 1826 may also be considered a computer-readable medium / memory. Each computer-readable medium / memory 1824', 1806', 1826 may be non-transitory. The cellular baseband processor 1824 and the application processor 1806 are each responsible for general processing, including the execution of software stored on the computer-readable medium / memory. The software, when executed by the cellular baseband processor 1824 / application processor 1806, causes the cellular baseband processor 1824 / application processor 1806 to perform the various functions described herein. The computer-readable medium / memory may also be used for storing data that is manipulated by the cellular baseband processor 1824 / application processor 1806 when executing software. The cellular baseband processor 1824 / application processor 1806 may be a component of the device 350 and may include the memory 360 and/or at least one of the TX processor 368, the RX processor 356, and the controller/processor 359. In one configuration, the apparatus 1804 may be a processor chip (modem and/or application) and include just the cellular baseband processor 1824 and/or the application processor 1806, and in another configuration, the apparatus 1804 may be the entire UE (e.g., see 350 of FIG. 3) and include the additional modules of the apparatus 1804.

As discussed herein, the sidelink DRX configuration component 198 may be configured to receive an SL DRX configuration including a first inactivity timer associated with a non-positioning communication and a second inactivity timer associated with a positioning communication, where the first inactivity timer corresponds to a first duration and the second inactivity timer corresponds to a second duration. In some aspects, the sidelink DRX configuration component 198 may be further configured to enter a sleep state based on the SL DRX configuration. In some aspects, the sidelink DRX configuration component 198 may be further configured to initiate a wake-up state from the sleep state to receive a message associated with scheduling a SL PRS. In some aspects, the sidelink DRX configuration component 198 may be further configured to trigger a continuation of the wake-up state upon receiving the message to receive at least one subsequent transmission including the SL PRS, where a duration of the continuation of the wake-up state is based on the first duration or the second duration.

In some aspects, the sidelink DRX configuration component 198 may be configured to establish a positioning session with a second UE. In some aspects, the sidelink DRX configuration component 198 may be further configured to transmit an SL DRX configuration including a first inactivity timer associated with a non-positioning communication and a second inactivity timer associated with a positioning communication, where the first inactivity timer corresponds to a first duration and the second inactivity timer corresponds to a second duration. In some aspects, the sidelink DRX configuration component 198 may be further configured to transmit a message associated with scheduling a SL PRS, where at least one subsequent transmission to the UE includes the SL PRS.

The sidelink DRX configuration component 198 may be within the cellular baseband processor 1824, the application processor 1806, or both the cellular baseband processor 1824 and the application processor 1806. The sidelink DRX configuration component 198 may be one or more hardware components specifically configured to carry out the stated processes/algorithm, implemented by one or more processors configured to perform the stated processes/algorithm, stored within a computer-readable medium for implementation by one or more processors, or some combination thereof. As shown, the apparatus 1804 may include a variety of components configured for various functions. In one configuration, the apparatus 1804, and in particular the cellular baseband processor 1824 and/or the application processor 1806, includes means for receiving an SL DRX configuration including a first inactivity timer associated with a non-positioning communication and a second inactivity timer associated with a positioning communication, where the first inactivity timer corresponds to a first duration and the second inactivity timer corresponds to a second duration. In some aspects, the apparatus 1804 may further include means for entering a sleep state based on the SL DRX configuration. In some aspects, the apparatus 1804 may further include means for initiating a wake-up state from the sleep state to receive a message associated with scheduling a SL PRS. In some aspects, the apparatus 1804 may further include means for triggering a continuation of the wake-up state upon receiving the message to receive at least one subsequent transmission including the SL PRS, where a duration of the continuation of the wake-up state is based on the first duration or the second duration. In some aspects, the apparatus 1804 may further include means for receiving an indication representing content to be received in the at least one subsequent transmission or determining the content to be received in the at least one subsequent transmission based on a second configuration. In some aspects, the apparatus 1804 may further include means for triggering the continuation of the wake-up state after the first duration or the second duration upon receiving a subset of the content. In some aspects, the apparatus 1804 may further include means for triggering the continuation of the wake-up state after the first duration or the second duration upon receiving a first subset of the content, where the continuation is triggered until a maximum time or until receiving a second subset of the content including a minimum number of measurement results in the set of measurement results. In some aspects, the apparatus 1804 may further include means for establishing a positioning session with a UE. In some aspects, the apparatus 1804 may further include means for transmitting an SL DRX configuration including a first inactivity timer associated with a non-positioning communication and a second inactivity timer associated with a positioning communication, where the first inactivity timer corresponds to a first duration and the second inactivity timer corresponds to a second duration. In some aspects, the apparatus 1804 may further include means for transmitting a message associated with scheduling a SL PRS, where at least one subsequent transmission to the UE includes the SL PRS. The means may be the sidelink DRX configuration component 198 of the apparatus 1804 configured to perform the functions recited by the means. As described herein, the apparatus 1804 may include the TX processor 368, the RX processor 356, and the controller/processor 359. As such, in one configuration, the means may be the TX processor 368, the RX processor 356, and/or the controller/processor 359 configured to perform the functions recited by the means.

It is understood that the specific order or hierarchy of blocks in the processes / flowcharts disclosed is an illustration of example approaches. Based upon design preferences, it is understood that the specific order or hierarchy of blocks in the processes / flowcharts may be rearranged. Further, some blocks may be combined or omitted. The accompanying method claims present elements of the various blocks in a sample order, and are not limited to the specific order or hierarchy presented.

The previous description is provided to enable any person skilled in the art to practice the various aspects described herein. Various modifications to these aspects will be readily apparent to those skilled in the art, and the generic principles defined herein may be applied to other aspects. Thus, the claims are not limited to the aspects described herein, but are to be accorded the full scope consistent with the language claims. Reference to an element in the singular does not mean "one and only one" unless specifically so stated, but rather "one or more." Terms such as "if," "when," and "while" do not imply an immediate temporal relationship or reaction. That is, these phrases, e.g., "when," do not imply an immediate action in response to or during the occurrence of an action, but simply imply that if a condition is met then an action will occur, but without requiring a specific or immediate time constraint for the action to occur. The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "one or more of A, B, or C," "at least one of A, B, and C," "one or more of A, B, and C," and "A, B, C, or any combination thereof" include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof" may be A only, B only, C only, A and B, A and C, B and C, or A and B and C, where any such combinations may contain one or more member or members of A, B, or C. Sets should be interpreted as a set of elements where the elements number one or more. Accordingly, for a set of X, X would include one or more elements. If a first apparatus receives data from or transmits data to a second apparatus, the data may be received/transmitted directly between the first and second apparatuses, or indirectly between the first and second apparatuses through a set of apparatuses. The words "module," "mechanism," "element," "device," and the like may not be a substitute for the word "means." As such, no claim element is to be construed as a means plus function unless the element is expressly recited using the phrase "means for."

## Claims

1. An apparatus for wireless communication at a user equipment, UE, comprising:
a memory; and
at least one processor coupled to the memory and, based at least in part on information stored in the memory, the at least one processor is configured to:
receive (1602) a sidelink, SL, discontinuous reception, DRX, configuration comprising a first inactivity timer associated with a non-positioning communication and a second inactivity timer associated with a positioning communication, wherein the first inactivity timer corresponds to a first duration and the second inactivity timer corresponds to a second duration;
enter (1604) a sleep state based on the SL DRX configuration;
initiate (1606) a wake-up state from the sleep state to receive a message associated with scheduling a SL positioning reference signal, PRS; and
trigger (1608) a continuation of the wake-up state upon receiving the message to receive at least one subsequent transmission comprising the SL PRS, wherein a duration of the continuation of the wake-up state is based on the first duration or the second duration.

2. The apparatus of claim 1, wherein the continuation is based on the second inactivity timer when the at least one subsequent transmission comprises the SL PRS without non-positioning-related data;
or wherein the continuation is based on the first inactivity timer when the at least one subsequent transmission comprises the SL PRS and non-positioning-related data;
or wherein the continuation is based on a larger one of the first duration or the second duration when the at least one subsequent transmission comprises the SL PRS and non-positioning-related data.

3. The apparatus of claim 1, wherein the first inactivity timer or the second inactivity timer resets upon receiving the SL PRS.

4. The apparatus of claim 1, wherein the SL PRS is scheduled or indicated by a physical sidelink control channel, PSCCH, or a physical sidelink shared channel, PSSCH, for a positioning session associated with the positioning communication.

5. The apparatus of claim 1, wherein the second inactivity timer is associated with a positioning session associated with the positioning communication, wherein the positioning session is associated with a destination identifier, a source and destination identifier pair, or a session identifier.

6. The apparatus of claim 1, wherein the at least one processor is configured to receive an indication representing content to be received in the at least one subsequent transmission or determine the content to be received in the at least one subsequent transmission based on a second configuration.

7. The apparatus of claim 6, wherein the content comprises the SL PRS;
or wherein the content comprises the SL PRS and a set of measurement results associated with a set of UEs;
or wherein the content comprises a set of measurement results associated with a set of UEs without the SL PRS.

8. The apparatus of claim 6, wherein the at least one processor is configured to:
trigger the continuation of the wake-up state after the first duration or the second duration upon receiving a subset of the content.

9. The apparatus of claim 8, wherein the content comprises a set of measurement results associated with a set of UEs, and wherein the at least one processor is configured to:
trigger the continuation of the wake-up state after the first duration or the second duration upon receiving a first subset of the content, wherein the continuation is triggered until a maximum time or until receiving a second subset of the content comprising a minimum number of measurement results in the set of measurement results.

10. The apparatus of claim 1, wherein the second inactivity timer is based on one or more of: a positioning quality of service, QoS, associated with the positioning communication, a response time parameter associated with the positioning QoS, or an accuracy parameter associated with the positioning QoS.

11. The apparatus of claim 1, wherein the message is sidelink control information, SCI, or a medium access control, MAC, control element, MAC-CE.

12. The apparatus of claim 1, further comprising a transceiver or an antenna coupled to the at least one processor, and wherein the transceiver or the antenna is configured to receive the at least one subsequent transmission.

13. An apparatus for wireless communication at a user equipment, UE, comprising:
a memory; and
at least one processor coupled to the memory and, based at least in part on information stored in the memory, the at least one processor is configured to:
establish (1702) a positioning session with a second user equipment, UE;
transmit (1704) a sidelink, SL, discontinuous reception, DRX, configuration comprising a first inactivity timer associated with a non-positioning communication and a second inactivity timer associated with a positioning communication, wherein the first inactivity timer corresponds to a first duration and the second inactivity timer corresponds to a second duration; and
transmit (1706) a message associated with scheduling a SL positioning reference signal, PRS, wherein at least one subsequent transmission to the UE includes the SL PRS.

14. A method (1600) of wireless communication at a user equipment, UE, comprising:
receiving (1602) a sidelink, SL, discontinuous reception, DRX, configuration comprising a first inactivity timer associated with a non-positioning communication and a second inactivity timer associated with a positioning communication, wherein the first inactivity timer corresponds to a first duration and the second inactivity timer corresponds to a second duration;
entering (1604) a sleep state based on the SL DRX configuration;
initiating (1606) a wake-up state from the sleep state to receive a message associated with scheduling a SL positioning reference signal, PRS; and
triggering (1608) a continuation of the wake-up state upon receiving the message to receive at least one subsequent transmission comprising the SL PRS, wherein a duration of the continuation of the wake-up state is based on the first duration or the second duration.

15. A method (1700) of wireless communication at a first user equipment, UE:
establishing (1702) a positioning session with a second user equipment, UE;
transmitting (1704) a sidelink, SL, discontinuous reception, DRX, configuration comprising a first inactivity timer associated with a non-positioning communication and a second inactivity timer associated with a positioning communication, wherein the first inactivity timer corresponds to a first duration and the second inactivity timer corresponds to a second duration; and
transmitting (1706) a message associated with scheduling a SL positioning reference signal, PRS, wherein at least one subsequent transmission to the UE includes the SL PRS.

## Patentansprüche

1. Vorrichtung zur drahtlosen Kommunikation an einem UE (User Equipment), die Folgendes umfasst:
einen Speicher; und
mindestens einen mit dem Speicher gekoppelten Prozessor, wobei der mindestens eine Prozessor, zumindest teilweise auf der Basis von im Speicher gespeicherten Informationen, konfiguriert ist zum:
Empfangen einer SL-(Sidelink)-DRX-(Diskontinuierlicher Empfang)-Konfiguration, die einen mit einer Nicht-Ortungskommunikation assoziierten ersten Inaktivitätstimer und einen mit einer Ortungskommunikation assoziierten zweiten Inaktivitätstimer umfasst, wobei der erste Inaktivitätstimer einer ersten Dauer entspricht und der zweite Inaktivitätstimer einer zweiten Dauer entspricht;
Eintreten (1604) in einen Schlummerzustand auf der Basis der SL-DRX-Konfiguration;
Einleiten (1606) eines Wachzustands aus dem Schlummerzustand, um eine mit der Planung eines SL-PRS (Positioning Reference Signal) assoziierte Nachricht zu empfangen; und
Auslösen (1608) einer Fortsetzung des Wachzustands nach dem Empfang der Nachricht zum Empfangen mindestens einer das SL-PRS umfassenden nachfolgenden Übertragung, wobei eine Dauer der Fortsetzung des Wachzustands auf der ersten Dauer oder der zweiten Dauer basiert.

2. Vorrichtung nach Anspruch 1, wobei die Fortsetzung auf dem zweiten Inaktivitätstimer basiert, wenn die mindestens eine nachfolgende Übertragung das SL-PRS ohne nicht ortungsbezogene Daten umfasst;
oder wobei die Fortsetzung auf dem ersten Inaktivitätstimer basiert, wenn die mindestens eine nachfolgende Übertragung das SL-PRS und nicht ortungsbezogene Daten umfasst;
oder wobei die Fortsetzung auf der größeren von erster Dauer und zweiter Dauer basiert, wenn die mindestens eine nachfolgende Übertragung das SL-PRS und nicht ortungsbezogene Daten umfasst.

3. Vorrichtung nach Anspruch 1, wobei der erste Inaktivitätstimer oder der zweite Inaktivitätstimer nach dem Empfang des SL-PRS zurückgesetzt wird.

4. Vorrichtung nach Anspruch 1, wobei das SL-PRS durch einen PSCCH (Physical Sidelink Control Channel) oder einen PSSCH (Physical Sidelink Shared Channel) für eine mit der Ortungskommunikation assoziierte Ortungssitzung geplant oder angegeben wird.

5. Vorrichtung nach Anspruch 1, wobei der zweite Inaktivitätstimer mit einer mit der Ortungskommunikation assoziierten Ortungssitzung assoziiert ist, wobei die Ortungssitzung mit einer Zielkennung, einem Quell- und Zielkennungspaar oder einer Sitzungskennung assoziiert ist.

6. Vorrichtung nach Anspruch 1, wobei der mindestens eine Prozessor zum Empfangen einer Angabe, die in der mindestens einen nachfolgenden Übertragung zu empfangenden Inhalt repräsentiert, oder zum Bestimmen des in der mindestens einen nachfolgenden Übertragung zu empfangenden Inhalts auf der Basis einer zweiten Konfiguration konfiguriert ist.

7. Vorrichtung nach Anspruch 6, wobei der Inhalt den SL-PRS umfasst;
oder wobei der Inhalt das SL-PRS und einen Satz von mit einem Satz von UEs assoziierten Messergebnissen umfasst;
oder wobei der Inhalt einen Satz von mit einem Satz von UEs assoziierten Messergebnissen ohne das SL-PRS umfasst.

8. Vorrichtung nach Anspruch 6, wobei der mindestens eine Prozessor konfiguriert ist zum:
Auslösen der Fortsetzung des Wachzustands nach der ersten Dauer oder der zweiten Dauer nach dem Empfang eines Teilsatzes des Inhalts.

9. Vorrichtung nach Anspruch 8, wobei der Inhalt einen Satz von mit einem Satz von UEs assoziierten Messergebnissen umfasst, und wobei der mindestens eine Prozessor konfiguriert ist zum:
Auslösen der Fortsetzung des Wachzustands nach der ersten Dauer oder der zweiten Dauer nach dem Empfang eines ersten Teilsatzes des Inhalts, wobei die Fortsetzung bis zu einer maximalen Zeit oder bis zum Empfang eines zweiten Teilsatzes des Inhalts ausgelöst wird, der eine Mindestanzahl von Messergebnissen in dem Satz von Messergebnissen umfasst.

10. Vorrichtung nach Anspruch 1, wobei der zweite Inaktivitätstimer auf einem oder mehreren basiert von: einer mit der Ortungskommunikation assoziierten Ortungs-QoS (Quality of Service), einem mit der Ortungs-QoS assoziierten Antwortzeitparameter und einem mit der Ortungs-QoS assoziierten Genauigkeitsparameter.

11. Vorrichtung nach Anspruch 1, wobei die Nachricht SCI (Sidelink Control Information) oder ein MAC-CE (Medium Access Control Control Element) ist.

12. Vorrichtung nach Anspruch 1, die ferner eine(n) mit dem mindestens einen Prozessor gekoppelte(n) Transceiver oder Antenne umfasst, und wobei der Transceiver oder die Antenne zum Empfangen der mindestens einen nachfolgenden Übertragung konfiguriert ist.

13. Vorrichtung zur drahtlosen Kommunikation an einem UE (User Equipment), die Folgendes umfasst:
einen Speicher; und
mindestens einen mit dem Speicher gekoppelten Prozessor, wobei der mindestens eine Prozessor, zumindest teilweise auf der Basis von im Speicher gespeicherten Informationen, konfiguriert ist zum:
Einrichten (1702) einer Ortungssitzung mit einem zweiten UE (User Equipment);
Übertragen (1704) einer SL-(Sidelink)-DRX-(Diskontinuierlicher Empfang)-Konfiguration, die einen mit einer Nicht-Ortungskommunikation assoziierten ersten Inaktivitätstimer und einen mit einer Ortungskommunikation assoziierten zweiten Inaktivitätstimer umfasst, wobei der erste Inaktivitätstimer einer ersten Dauer entspricht und der zweite Inaktivitätstimer einer zweiten Dauer entspricht; und
Übertragen (1706) einer mit der Planung eines SL-PRS (Positioning Reference Signal) assoziierten Nachricht, wobei mindestens eine nachfolgende Übertragung zu dem UE das SL-PRS enthält.

14. Verfahren (1600) zur drahtlosen Kommunikation an einem UE (User Equipment), das Folgendes beinhaltet:
Empfangen (1602) einer SL-(Sidelink)-DRX-(Diskontinuierlicher Empfang)-Konfiguration, die einen mit einer Nicht-Ortungskommunikation assoziierten ersten Inaktivitätstimer und einen mit einer Ortungskommunikation assoziierten zweiten Inaktivitätstimer umfasst, wobei der erste Inaktivitätstimer einer ersten Dauer und der zweite Inaktivitätstimer einer zweiten Dauer entspricht;
Eintreten (1604) in einen Schlummerzustand auf der Basis der SL-DRX-Konfiguration;
Einleiten (1606) eines Wachzustands aus dem Schlummerzustand, um eine mit der Planung eines SL-PRS (Positioning Reference Signal) assoziierte Nachricht zu empfangen; und
Auslösen (1608) einer Fortsetzung des Wachzustands nach dem Empfang der Nachricht zum Empfangen mindestens einer das SL-PRS umfassenden nachfolgenden Übertragung, wobei eine Dauer der Fortsetzung des Wachzustands auf der ersten Dauer oder der zweiten Dauer basiert.

15. Verfahren (1700) zur drahtlosen Kommunikation an einem ersten UE (User Equipment):
Einrichten (1702) einer Ortungssitzung mit einem zweiten UE (User Equipment);
Übertragen (1704) einer SL-(Sidelink)-DRX-(Diskontinuierlicher Empfang)-Konfiguration, die einen mit einer Nicht-Ortungskommunikation assoziierten ersten Inaktivitätstimer und einen mit einer Ortungskommunikation assoziierten zweiten Inaktivitätstimer umfasst, wobei der erste Inaktivitätstimer einer ersten Dauer entspricht und der zweite Inaktivitätstimer einer zweiten Dauer entspricht; und
Übertragen (1706) einer mit der Planung eines SL-PRS (Positioning Reference Signal) assoziierten Nachricht, wobei mindestens eine nachfolgende Übertragung zu dem UE das SL-PRS enthält.

## Revendications

1. Appareil de communication sans fil au niveau d'un équipement utilisateur, UE, comprenant :
une mémoire ; et
au moins un processeur couplé à la mémoire et, sur la base au moins en partie d'informations stockées dans la mémoire, l'au moins un processeur est configuré pour :
recevoir (1602) une configuration de réception discontinue, DRX, sur liaison latérale, SL, comprenant un premier temporisateur d'inactivité associé à une communication non de positionnement et un second temporisateur d'inactivité associé à une communication de positionnement, dans lequel le premier temporisateur d'inactivité correspond à une première durée et le second temporisateur d'inactivité correspond à une seconde durée ;
passer (1604) à un état de veille sur la base de la configuration DRX SL ;
lancer (1606) un état de réveil à partir de l'état de veille pour recevoir un message associé à un ordonnancement d'un signal de référence de positionnement, PRS, de SL ; et
déclencher (1608) une continuation de l'état de réveil sur réception du message pour recevoir au moins une transmission ultérieure comprenant le PRS SL, dans lequel la durée de la continuation de l'état de réveil est basée sur la première durée ou la seconde durée.

2. Appareil selon la revendication 1, dans lequel la continuation est basée sur le second temporisateur d'inactivité lorsque l'au moins une transmission ultérieure comprend le PRS SL sans données non liées au positionnement :
ou dans lequel la continuation est basée sur le premier temporisateur d'inactivité lorsque l'au moins une transmission ultérieure comprend le PRS SL et des données non liées au positionnement ;
ou dans lequel la continuation est basée sur la plus grande de la première durée ou de la seconde durée lorsque l'au moins une transmission ultérieure comprend le PRS SL et des données non liées au positionnement.

3. Appareil selon la revendication 1, dans lequel le premier temporisateur d'inactivité ou le second temporisateur d'inactivité se réinitialise sur réception du PRS SL.

4. Appareil selon la revendication 1, dans lequel le PRS SL est ordonnancé ou indiqué par un canal physique de commande de liaison latérale, PSCCH, ou un canal physique partagé de liaison latérale, PSSCH, pour une session de positionnement associée à la communication de positionnement.

5. Appareil selon la revendication 1, dans lequel le second temporisateur d'inactivité est associé à une session de positionnement associée à une communication de positionnement, dans lequel la session de positionnement est associée à un identifiant de destination, une paire d'identifiants de source et de destination, ou un identifiant de session.

6. Appareil selon la revendication 1, dans lequel l'au moins un processeur est configuré pour recevoir une indication représentant un contenu destiné à être reçu dans l'au moins une transmission ultérieure ou déterminer un contenu destiné à être reçu dans l'au moins une transmission ultérieure sur la base d'une seconde configuration.

7. Appareil selon la revendication 6, dans lequel le contenu comprend le PRS SL :
ou dans lequel le contenu comprend le PRS SL et un ensemble de résultats de mesure associés à un ensemble d'UE ;
ou dans lequel le contenu comprend un ensemble de résultats de mesure associés à un ensemble d'UE sans le PRS SL.

8. Appareil selon la revendication 6, dans lequel l'au moins un processeur est configuré pour :
déclencher la continuation de l'état de réveil après la première durée ou la seconde durée sur réception d'un sous-ensemble du contenu.

9. Appareil selon la revendication 8, dans lequel le contenu comprend un ensemble de résultats de mesure associés à un ensemble d'UE, et dans lequel l'au moins un processeur est configuré pour :
déclencher la continuation de l'état de réveil après la première durée ou la seconde durée sur réception d'un premier sous-ensemble du contenu, dans lequel la continuation est déclenchée jusqu'à un temps maximum ou jusqu'à réception d'un second sous-ensemble du contenu comprenant un nombre minimum de résultats de mesure dans l'ensemble de résultats de mesure.

10. Appareil selon la revendication 1, dans lequel le second temporisateur d'inactivité est basé sur un ou plusieurs d'une qualité de service, QoS, de positionnement, associée à la communication de positionnement, d'un paramètre de temps de réponse associé à la QoS de positionnement, ou d'un paramètre de précision associé à la QoS de positionnement.

11. Appareil selon la revendication 1, dans lequel le message consiste en informations de commande de liaison latérale, SCI, ou un élément de commande de commande d'accès au support, MAC, MAC-CE.

12. Appareil selon la revendication 1, comprenant en outre un émetteur-récepteur ou une antenne couplée à au moins un processeur, et dans lequel l'émetteur-récepteur ou l'antenne est configuré pour recevoir l'au moins une transmission ultérieure.

13. Appareil de communication sans fil au niveau d'un équipement utilisateur, UE, comprenant :
une mémoire ;: et
au moins un processeur couplé à la mémoire et, sur la base au moins en partie d'informations stockées dans la mémoire, l'au moins un processeur est configuré pour :
établir (1702) une session de positionnement avec un second équipement utilisateur, UE ;
transmettre (1704) une configuration de réception discontinue, DRX, sur liaison latérale, SL, comprenant un premier temporisateur d'inactivité associé à une communication non de positionnement et un second temporisateur d'inactivité associé à une communication de positionnement, dans lequel le premier temporisateur d'inactivité correspond à une première durée et le second temporisateur d'inactivité correspond à une seconde durée ; et
transmettre (1706) un message associé à l'ordonnancement d'un signal de référence de positionnement, PRS, de SL, dans lequel au moins une transmission ultérieure à l'UE comporte le PRS SL.

14. Procédé (1600) de communication sans fil au niveau d'un équipement utilisateur, UE, comprenant :
la réception (1602) d'une configuration de réception discontinue, DRX, sur liaison latérale, SL, comprenant un premier temporisateur d'inactivité associé à une communication non de positionnement et un second temporisateur d'inactivité associé à une communication de positionnement, dans lequel le premier temporisateur d'inactivité correspond à une première durée et le second temporisateur d'inactivité correspond à une seconde durée ;
le passage (1604) à une état de veille sur la base de la configuration DRX SL ;
le lancement (1606) d'un état de réveil à partir de l'état de veille pour recevoir un message associé à un ordonnancement d'un signal de référence de positionnement, PRS, de SL : et
le déclenchement (1608) d'une continuation de l'état de réveil sur réception du message pour recevoir au moins une transmission ultérieure comprenant le PRS SL, dans lequel une durée de la continuation de l'état de réveil est basée sur la première durée ou la seconde durée.

15. Procédé (1700) de communication sans fil au niveau d'un premier équipement premier utilisateur, UE :
l'établissement (1702) d'une session de positionnement avec un second équipement utilisateur, UE ;
la transmission (1704) d'une configuration de réception discontinue, DRX, sur liaison latérale, SL, comprenant un premier temporisateur d'inactivité associé à une communication non de positionnement et un second temporisateur d'inactivité associé à une communication de positionnement, dans lequel le premier temporisateur d'inactivité correspond à une première durée et le second temporisateur d'inactivité correspond à une seconde durée ; et
la transmission (1706) d'un message associé à l'ordonnancement d'un signal de référence de positionnement, PRS, de SL dans lequel l'au moins une transmission ultérieure à l'UE comporte le PRS SL.
